(19) Europäisches Patentamt
European Patent Office
Office européen des brevets

(11) EP 1 131 381 B1

(12) EUROPEAN PATENT SPECIFICATION

(45) Date of publication and mention of the grant of the patent:
**18.09.2002 Bulletin 2002/38**

(21) Application number: **99972661.5**

(22) Date of filing: **22.11.1999**

(51) Int Cl.[7]: **C08K 9/06**, C09C 3/12

(86) International application number:
**PCT/CA99/01096**

(87) International publication number:
**WO 00/031180 (02.06.2000 Gazette 2000/22)**

# (54) PROCESS FOR HYDROPHOBICIZING PARTICLES, AND THEIR USE IN POLYMER DISPERSIONS

VERFAHREN ZUM HYDROPHOBIEREN VON PARTIKELN UND IHRE VERWENDUNG ALS IN POLYMERDISPERSION

PROCEDE POUVANT RENDRE DES PARTICULES HYDROPHOBES ET UTILISATION DE CES PARTICULES DANS DES DISPERSIONS POLYMERES

(84) Designated Contracting States:
**DE ES FR GB IT**

(30) Priority: **20.11.1998 CA 2254559**

(43) Date of publication of application:
**12.09.2001 Bulletin 2001/37**

(73) Proprietor: **Bayer Inc.**
**Sarnia, ON N7T 7M2 (CA)**

(72) Inventor: **KOSKI, Ahti, August**
**Wilkesport, Ontario N0P 2R0 (CA)**

(74) Representative: **Schneider, Jürgen, Dr. et al**
**Bayer AG**
**Konzernbereich RP,**
**Patente und Lizenzen**
**51368 Leverkusen (DE)**

(56) References cited:
**EP-A- 0 176 062**
**WO-A-98/52954**
**WO-A-98/53004**
**US-A- 5 190 660**

- **PATENT ABSTRACTS OF JAPAN vol. 1995, no. 10, 30 November 1995 (1995-11-30) -& JP 07 187647 A (MITSUBISHI MATERIALS CORP), 25 July 1995 (1995-07-25)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 131 381 B1

## Description

### TECHNICAL FIELD

In one of its aspects, the present invention relates to the hydrophobizing of particles, particularly inorganic water-insoluble compounds. In another of its aspects, the present invention also relates to an intermediate useful to produce the hydrophobicized particles. The treated particles are useful particularly, but not exclusively in the compounding of polymers, especially rubbers and plastics.

### BACKGROUND ART

Raw polymers, either rubbers or plastics, rarely have the inherent physical or chemical properties in their pure state that are necessary to make useful articles. The polymers must thus be further compounded by mixing with additional ingredients or "additives". Polymer additives may include one or more of: secondary polymers; extender oils; fillers; antioxidants; coloring pigments, stabilizers, flame retardants, processing aids and other ancillary chemicals. For rubbers, this list may be extended to include curatives (vulcanizing agents) such as sulfur or organic peroxides; cure accelerators such as dibenzothiazyl disulphide (MBTS) and tetramethylthiuram disulfide (TMTD), as well as inorganic cure activators such as zinc oxide, lead monoxide (PbO, litharge), red lead ($Pb_3O_4$), and the like. Regardless of whether it is plastic or rubber properties in which improvement is sought, the selected additive materials must be mixed intimately with the polymer at the compounding stage (so as to obtain a homogeneous dispersion) in order for the maximum improvements to be realized. Conventionally, this mixing is usually accomplished on an open mill, in a mixing extruder or in an internal mixer (such as the Henschel, Welex or Banbury types) using one or more steps until the desired degree of dispersion is achieved.

Quite often, a satisfactory dispersion of the additive in the polymer is difficult to attain in a reasonable time, resulting in inhomogeneity which translates into unacceptable physical properties or appearance in the formed article. To improve the dispersion, an extended mixing time or multi-stage mixing cycle must be employed which lowers productivity in the mixing plant and is thus undesirable.

Within the industry, it is known that mixing of inorganic chemicals such as the inorganic activators used in the rubber industry presents special difficulties in this regard because of the inherent hardness and much higher viscosity of these chemicals relative to the polymer matrix.

One general method of facilitating mixing and dispersion of these inorganic materials into polymer compounds in the factory is to use a very fine particle size inorganic material. However, this inevitably generates dust during both the material handling and mixing process and in many cases these dust particles are toxic or otherwise unacceptable from a worker health standpoint. Dust losses also change the ratio of the chemicals to the base polymer from what was originally intended; this may lead to poor processing or poor finished properties in the compound. In some specific cases (i.e., with talc), very fine particles may act as a lubricant and actually contribute to poor mixing of the bulk, in this case by reducing the shear which is needed for dispersion. In other cases, especially where polar ingredients must be mixed into a non-polar polymer, agglomeration of the particles may occur during mixing, leading to undesirable inhomogeneity and unsatisfactory physical properties.

To mitigate the above problems, it is well known in the art to add the inorganic chemicals to the base polymer in a predispersed form, e.g., as fine particles bound in a low viscosity medium (or binder) such as polymer or oil, or combinations thereof with additional additives. This bound form of inorganic chemicals overcomes the dust problem in the rubber compounding plant and also greatly shortens the dispersing time of the inorganic materials in the polymer compound, particularly if the binder is chemically similar to the base polymer and the viscosity of the pre-dispersion closely matches that of the rest of the compound. From a compounding standpoint, it is desirable to have the minimum amount of binder that will both facilitate dispersion and eliminate dusting during processing.

These types of "concentrates" or "dispersions" thus typically contain from about 50% to 95% by weight of the active inorganic chemical dispersed in a suitable binder (practically, this corresponds to a range of from 100 to 1900 parts by weight of inorganic chemical per 100 parts by weight of binder). Many such materials are commercially available from a number of suppliers to the rubber industries. Non-limiting examples of such commercial polymer-bound materials used in the rubber industry are: RHENOGRAN® ZnO-85 (85 weight percent zinc oxide dispersed in an EPDM/EVA binder); POLY-DISPERSION® PLD-90 (90 weight percent lead monoxide dispersed in polyisobutylene); RHENOGRAN® $Pb_3O_4$-90 (90 weight percent red lead oxide dispersed in EPDM/EVA), all available from Rhein-Chemie Corporation and Rhein Chemie Reinau GmbH.

Cheaper oil-based binders may also be used; while these address the dust problem, they do not offer as good or as rapid a dispersion as the presence of oil lowers the friction necessary to cause comminution of the inorganic materials during mixing. The presence of oil may also cause other changes in the physical properties (i.e., softening) or appearance (colour) which are undesirable. An example of the latter type of dispersion is Polydex™ PPD (ZnO) 75,

a 75 weight percent blend of ZnO in a light process oil, available from Polychem.

In the plastics industry, it is often desired to modify the viscosity (i.e., the "melt index"), hardness, color, lightfastness and/or other properties of the base polymer in order to render it processible or suitable for its intended end-use application. Again, these additives (chemicals), in their pure form, may be added directly to the bulk plastic during the processing (compounding) phase, although it is more customary to use the materials as concentrates in liquid or pellet form in order to obtain better dispersion and better control of the process. Again, these concentrates consist of a dispersion of fine particles of the additive in a suitable carrier or "binder" which may be similar or identical to the base polymer, or it may be another compatible polymer or a combination of polymers and oil. Also, other ingredients (e.g., soaps, compatibilizing agents and dispersing aids) may be included in the base of the binder. This concentrate form is used almost exclusively for introducing inorganic colorants into plastics where the high hardness and high melting point of the additives causes dispersion problems. Many companies currently supply inorganic and organic additive concentrates to the plastics industry; non-limiting examples of the latter materials include: ComPETe™, CELPRO™, Holoflake™, Hanna-FX™ (M.A. Hanna Color), BARKOLEN™ (SPUR® a.s.), POLYPLUS™ (PolyTech South Inc.), CEK CONCENTRATES™, COLORPLAST™, CONCORDE™ (C.E.K. Concentrates) and the like.

Conventionally, these pre-dispersed forms of inorganic additives for use in the rubber and plastics industries have been produced by dry mechanical mixing of the ingredients - i.e., the additive in question is simply mechanically mixed with the binder material. Unfortunately, this approach serves only to transfer the mixing and dust problems from the rubber mixing plant to that of the supplier of the dispersion. Moreover, the relatively high percentage of inorganic material to binder desirable in these dispersions generally requires long mixing times or the use of special high energy mixing equipment (HIDM) which either lower productivity or add to the production costs. What would be most desirable is a dispersion manufacturing process that could be made essentially dust-free and required little mixing energy to disperse the inorganic ancillary material in a polymeric binder.

A facile known method to prepare fine particle size materials from coarser commercially available ones is by wet grinding, using either a ball, colloid or steam jet mill or other equipment as described under "Wet Grinding" in Ullmann's Encyclopedia of Industrial Chemistry Vol. B2 sec. 5-36. As the fine particles produced are continuously in a wet state, they have little tendency to become airborne dust. However, the concentration of the fine particles in the wetting medium is of necessity low in order to maintain the fluidity required for satisfactory grinding and thus the particles must be insoluble in the grinding medium. Where media other than water is employed during the size reduction process, additional hazards such as flammability and/or toxicity must be taken into consideration. Further, the resulting dispersions typically require concentration (i.e., solvent removal) before they can be further dispersed in a binder. Moreover, it is difficult to dry such fine particles without generating dust elsewhere in the process or without causing agglomeration (particle growth) during the drying step. Where possible, it would be preferable to produce masterbatches, dispersions and concentrates of these particles in suitable binders while the particles are still in a finely divided wet state. It is also preferable for economy and safety perspectives that the wetting medium be water. An additional benefit of using water is that it is generally a non-solvent for most of the organic and inorganic additives which are sold as dispersions.

Further, a number of prior art references teach how to make "masterbatches" of fillers and "dispersions" of other chemicals in polymers by using fine particles dispersed in an aqueous state. For instance, Burke (United States patent 3,689,451, United States patent 3,689,452, United States patent 3,700,690, United States patent 3,716,513 and United States patent 3,840,382) teaches how to use an aqueous dispersion of never-dried alkali silica pigment or a mixture of an aqueous dispersion of never-dried alkali silica pigment silica and carbon black to make a masterbatch of these fillers in a matrix of rubber at levels of <100 phr of filler (i.e., less than about 50% by weight of the filler dispersed in a rubber matrix). The rubbers must be used as solutions in water-immiscible solvents. Typically, large amounts of ancillary chemicals must also be employed to ensure transfer of the silica from the water suspension into the organic phase. In related patents (United States patent 3,686,219 and United States patent 3,694,398), Burke teaches how to prepare similar masterbatches from finely (aqueous) dispersed particles of silica by using the rubber in the form of a water emulsion - i.e., a latex. Nonetheless, all of the above Burke patents are restricted to the use of never-dried silica or combinations of never-dried silica and carbon black (i.e., conventional rubber fillers). The levels of the inorganic material in the finished dried masterbatch is moreover restricted to a low concentration and the binder is restricted to elastomers. To the knowledge of the inventor, no commercial masterbatches made by the Burke methods are currently available.

Contrary to the apparent commercial unavailablity of silica masterbatches, masterbatches of carbon black and rubbers prepared from both water emulsions of polymers (i.e., the latex as resulting from emulsion polymerization) and solutions of polymers in hydrocarbons (i.e., as resulting when the polymer is soluble in the polymerization medium) have been available from several suppliers for a number of years (Copolymer Div. of DSM; Bayer Inc.; Goodyear, etc.,). These masterbatches are usually prepared by grinding the carbon black in a wet aqueous state and then intensively mixing the black slurry with a solution-polymer "cement" or emulsion polymer latex, with or without added oil, followed by coagulation and drying. In all commercial masterbatch products, the levels of black filler are <100 phr (i.e., less than about 50% by weight of the filler dispersed in a rubber matrix).

Where the polymer is available as an aqueous emulsion (i.e., latex), various methods are available for the incorporation of ancillary chemicals to form dispersions; the coprecipitation methods of Leo and Johansson (United States patent 4,110,240) may be used to prepare concentrates containing 80-99.5 wt% of the ancillary chemicals (excluding fillers), either organic or inorganic in the polymeric binder. Kanou et al. (United States patent 4,713,411) detail a different coprecipitation process to produce a pigment composition by using a special water-soluble polymeric binder which is then rendered insoluble by pH changes. However, many polymers, especially plastics, are prepared by a solution polymerization process and are not readily available in a latex form.

Despite previous efforts in the prior art, there remains a need for an efficient manner of producing masterbatches, dispersions or concentrates of inorganic additive materials in a binder.

## DISCLOSURE OF THE INVENTION

It is an object of the present invention to obviate or mitigate at least one of the above-mentioned disadvantages of the prior art.

It is another object of the present invention to provide a novel intermediate material useful in the production of a relatively hydrophobic particulate material from a hydrophilic particulate starting material.

It is yet another object of the present invention to provide a novel process for treating particulate material to render it relatively hydrophobic.

In published International patent applications WO 98/52954 [Koski #1] and WO 98/53004 [Koski #2] there is taught a novel approach for producing masterbatches of polymers and particles. Generally, this approach, as taught in Koski #2, relates to initially rendering the particles hydrophobic to facilitate dispersion thereof in the polymer. Hydrophobicity is conferred to the particles by reacting the particles with particular aminohydrocarbon silane compounds or acid salts thereof. A particularly preferred process to produce a useful such compound and a subset of novel such compounds are taught in Koski #1.

In the present application, there is taught an approach different to that taught in Koski #1 and Koski #2. Generally, the approach taught herein relates to in situ production of the functional moiety of the aminohydrocarbon silane compound or an acid salt thereof on the particulate material (i.e., as opposed to reaction of the pre-manufactured aminohydrocarbon silane compounds and their acid salts with the particulate material). It is surprising that the functional moiety of the aminohydrocarbon silane compound or an acid salt thereof can be produced on the particulate material rapidly under very mild reaction conditions.

Accordingly, in one of its aspects, the present invention provides a process for treating particles to render them hydrophobic, the process comprising the steps of:

(i) contacting the particles with a compound of Formula I:

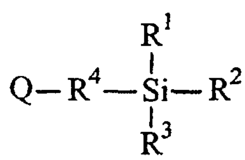

(I)

in which:

at least one of $R^1$, $R^2$ and $R^3$ is hydroxyl or a group hydrolysable at the Si-R bond;
$R^4$ is a divalent group that is resistant to hydrolysis at the Si-$R^4$ bond;
Q is $H_2N$-, -$H_2N \cdot HA$ or X-, wherein: HA is an mineral acid or an organic acid, and X is an anion; and

(ii) if Q is a salt moiety -$NH_2 \cdot HA$, then generating the free base of the amine moiety by adding a stoichiometric amount of strong base so as to react substantially completely with the acidic HA moiety;
(iii) contacting the particles with a substantially equimolar amount in relation to that of a compound of Formula I of:

(A) a compound of formula $R^5$-X if Q is $H_2N$- or -$NH_2 \cdot HA$ in Formula I, wherein $R^5$ is selected from: a $C_{8-40}$ alkyl; a $C_{8-40}$ mono-, $C_{8-40}$ di- or $C_{8-40}$ tri-unsaturated alkenyl group; a $C_{2-30}$ alkyl-substituted $C_6$-$C_{40}$ aromatic group; a $C_{2-30}$ mono-, $C_{3-30}$ di- or $C_{4-30}$ tri-unsaturated alkenyl-substituted $C_6$-$C_{40}$ aromatic group provided further there is no double bond in the position alpha to the nitrogen atom unless the alpha carbon is part of an aromatic ring whereby it is permitted, and provided that there is no branching at the carbon atom bound

directly to N; or

(B) a compound of formula R*-$NH_2$ if Q is X- in Formula I, wherein R* is selected from the group comprising $R^5$ or a group of the formula

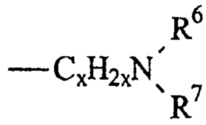

in which x is either:

(a) an integer from 8 to 30, and $R^6$ and $R^7$ may be the same or different and are selected from: $C_1$-$C_{30}$ alkyl; $C_2$-$C_{30}$ alkenyl; $C_6$-$C_{30}$ aromatic; $C_7$-$C_{30}$ alkyl substituted aromatic; or $C_8$-$C_{30}$ aryl-alkenyl, provided there is no double bond in the position alpha to the nitrogen atom, unless the alpha carbon is part of an aromatic ring whereby it is permitted and provided there is no branching at the carbon connected directly to N; one of either $R^6$ and $R^7$ but not both may also be hydrogen, or

(b) an integer from 1 to 7 and one of $R^6$ or $R^7$ is H and the other is selected from from: $C_1$-$C_{30}$ alkyl; $C_2$-$C_{30}$ alkenyl; $C_6$-$C_{30}$ aromatic; $C_7$-$C_{30}$ alkyl substituted aromatic; or $C_8$-$C_{30}$ aryl-alkenyl, provided there is no double bond in the position alpha to the nitrogen atom, unless the alpha carbon is part of an aromatic ring whereby it is permitted and provided there is no branching at the carbon connected directly to N; or if neither $R^6$ and $R^7$ is hydrogen, then $R^6$ and $R^7$ may be the same or different and at least one of $R^8$ or $R^9$ must be a $C_8$-$C_{30}$ alkyl, $C_8$-$C_{30}$ alkenyl, $C_8$-$C_{30}$ aromatic, or $C_7$-$C_{30}$ alkyl substituted aromatic, or $C_8$-$C_{30}$ aryl-alkenyl, provided there is no double bond in the position alpha to the nitrogen atom, unless the alpha carbon is part of an aromatic ring whereby it is permitted and provided there is no branching at the carbon connected directly to N, and the other may be $C_1$-$C_{30}$ alkyl, $C_2$-$C_{30}$ alkenyl, $C_6$-$C_{30}$ aromatic, or $C_7$-$C_{30}$ alkyl substituted aromatic, or $C_8$-$C_{30}$ aryl-alkenyl, again provided there is no double bond in the position alpha to the nitrogen atom unless the alpha carbon is part of an aromatic ring whereby it is permitted and further that there is no branching at the carbon bonded directly to N.

As will be discussed in more detail hereinbelow, it is preferred to use a coupling agent in the present process. The use of a coupling agent may occur at virtually point during the sequence of process steps.

Preferably, the present process of treating a particulate material is carried out in an aqueous suspension or slurry, so that the final product of the process is an aqueous suspension or slurry of hydrophobicized mineral particles.

In one preferred embodiment, the suspension or slurry resulting from the present process, and containing the treated particles, is then mixed with a hydrocarbon solution of a polymer, the solvent is removed and the product dried to form a polymer-particle masterbatch or dispersion. In another preferred embodiment, the suspension or slurry resulting from the present process, and containing the treated particles, is instead mixed with a polymer latex, the mixture is coagulated and the product dried to form a polymer-particle masterbatch or dispersion. In both emodiments, owing to the hydrophobic nature of the treated particles, they are well dispersed in the polymer. The treated particles are thus dispersed into a polymer matrix without being previously isolated (i.e., separated from the suspension or slurry, and subsequently dried). These preferred embodiments result in the production of a dispersion comprising a polymer and a treated particulate material (such as metal oxides and the like which will be discussed in more detail hereinbelow), the masterbatch or dispersion having been prepared from a polymer solution or latex without the need to utilize an aminohydrocarbon silane compound or an acid salt thereof, per se.

Alternatively, in another embodiment the treated particulate material may be separated from the suspension or slurry, and subsequently dried for later use (i.e., before addition of the polymer solution), or in still another embodiment an oil may be used in place of the polymer cement or polymer latex and the resultant product recovered by filtering and drying. In this specification, the terms "concentrate", "dispersion" and "pre-dispersion", when used in the context of the present invention, are intended to mean a composition comprising a particulate material (i.e., the additive(s) to be used for compounding purposes) and a binder therefor, wherein the particulate material is the major component of the composition - i.e., the composition comprises at least about 50 percent by weight particulate material. Preferably, the dispersion or concentrate composition comprises from about 50 to about 95, more preferably from about 60 to about 95, even more preferably from about 70 to about 95, percent by weight particulate material. In this specification, the term "masterbatch", when used in the context of the present invention, is intended to mean a composition comprising a particulate material (i.e., the additive(s) to be used for compounding purposes) and a binder therefor, wherein the

particulate material is the minor component of the composition - i.e., the composition comprises less than about 50 percent by weight particulate material. Preferably, the masterbatch composition comprises from about 5 to about 50, more preferably from about 20 to about 45, even more preferably from about 30 to about 40, percent by weight particulate material.

## BRIEF DESCRIPTION OF THE DRAWINGS

Embodiments of the present invention will be described with reference to the accompanying drawings, in which:

Figure 1 illustrates an example of a first embodiment of the present process;
Figure 2 illustrates an example of a second embodiment of the present process; and
Figure 3 illustrates a schematic of a system useful to conduct the present process.

## BEST MODE FOR CARRYING OUT THE INVENTION

Throughout this specification, the invention is illustrated with reference to silica as the particle having surface hydroxyl groups, but it should be appreciated that the invention applies to the use of other similar materials, and the description understood accordingly. Thus, the present invention is particularly useful to the treatment of inorganic water-insoluble compounds. Preferably the inorganic water insoluble compounds useful for treatment are those such compounds in which the chemical formula contains an oxygen atom, more preferably such compounds which the formula also contains a metal atom. More than one metal atom may be present in the chemical formula. Examples of suitable groups of useful oxygen atom compounds may be selected from the group comprising oxides, hydroxides, borates, sulfates, carbonates, silicates, phosphates, chromates and the like. Non-limiting examples of suitable oxygen atom and metal atom containing compounds may be selected from the group comprising silicon dioxide (silica), titanium oxide (titania, both rutile and anatase forms), ferric oxide, hydrated ferric oxide, ferrous oxide, antimony oxide, barium carbonate, zinc oxide, zinc borate, lead oxide (including red lead oxide), dibasic lead phosphite, lead silicate, tribasic lead sulfate and mixtures thereof. Other suitable metal atom- and oxygen atom- containing compounds, especially those which are water insoluble or only slightly soluble in water, will be readily apparent to those of skill in the art based on the foregoing discussion. For example, a particularly preferred application of the present invention is to render hydrophobic colorant or pigment particles which are typically used in the plastics industry. Non-limiting examples of suitable such particles may be selected from the group consisting of $\alpha$-FeOOH (goethite), $\gamma$-FeOOH (lepidocrocite), $\alpha$-$Fe_2O_3$ (hematite), $\gamma$-$Fe_2O_3$ (maghemite) and $Fe_3O_4$.

The preferred particles for the production of masterbatches by this invention is precipitated silica. In a preferred embodiment, the treatment is carried out in an aqueous dispersion or slurry of the particles. Generally, the precise make up of the slurry is not particularly restricted provided that it is a mobile suspension and remains so during the treatment process. Practically, it is preferred that the slurry contain the maximum amount by weight of particles to be treated which will still allow it to remain mobile. The maximum weight that will allow mobility to be maintained will vary directly according to the particle size of the silica and inversely with the concentration of surface silanol groups. Practically, concentrations of between 20-25 weight percent silica in water are usually possible with dried precipitated silicas and somewhat lower concentrations for never-dried silicas (i.e. filter cakes) as will be discussed later.

Dried amorphous silica suitable for use in accordance with the invention may have a mean agglomerate particle size between 0.1 and 100 microns, preferably between 0.1 and 50 microns and most preferably between 1 and 25 microns. It is preferred that less than 10 percent by volume of the agglomerate particles are below 5 microns or over 50 microns in size. A suitable amorphous dried silica moreover has a BET surface area, measured in accordance with DIN (Deutsche Industrie Norm) 66131, of between 50 and 450 square meters per gram and a DBP absorption, as measured in accordance with DIN 53601, of between 150 and 400 grams per 100 grams of silica, and a drying loss, as measured according to DIN ISO 787/II, of from 0 to 10 percent by weight.

If a wet silica filter cake is used, it may be made by filtering and optionally washing silica prepared by any known means such as described in Ullmann's Encyclopedia of Industrial Chemical Vol A23 pages 642-643, VCH Publishers, ©1993. The filter cake has a preferred solids content of between 10 and 30 percent by weight, most preferably between 15 and 25 percent by weight, and it may be redispersed in water in accordance with the present process to give a silica concentration of between 5 and 20 percent by weight and most preferably between 8 and 12 percent by weight. It is preferred to use a silica filter cake. It is more preferred to use a silica filter cake which is formed from a silica precipitated by means of carbon dioxide or hydrochloric acid or a combination thereof, and it is most preferred to wash the filter cake with water prior to redispersion in order to remove dissolved salt by-products.

If a never-filtered slurry prepared from the known reaction of a solution of alkali metal silicate with either mineral acid or carbon dioxide is used, it is preferred that the solids content of the never-filtered slurry be between 5

and 30, more preferably between 5 and 20, and most preferably between 10 and 20 percent by weight of silica.

The preferred particles for the production of dispersions by this invention are those metal- and oxygen- atom containing compounds that form a subset within materials broadly referred to as 'pigments' in rubber and plastics industries' vernacular. While these materials may not be used in these industries as pigments in the true sense, this terminology has remained since the materials were originally employed in the paint industry.

In a preferred embodiment, the treatment is carried out in an aqueous dispersion or slurry of the pigment particles. Generally, the precise make up of the slurry is not particularly restricted provided that it is a mobile suspension and remains so during the treatment process. Practically, it is preferred that the slurry contain the maximum amount by weight of particles to be treated which will still allow it to remain mobile. The maximum weight that will allow mobility to be maintained will vary directly according to the particle size of the filler, the degree of crystallinity of the filler and inversely with the concentration of surface hydroxyl groups. The shape of the particles also influences the achievable concentration; higher concentrations are achievable with rounded particles than with particles which have a highly structured surface. Concentrations of between 30-60 weight percent of pigment in water are usually realizable with dried pigments and somewhat lower concentrations for never-dried pigments (i.e. filter cakes) as will be discussed later. The maximum working concentration is best determined by experiment.

Dried pigments for use in accordance with the invention may have a mean agglomerate particle size between 0.01 and 500 microns, preferably between 0.1 and 50 microns and most preferably between 1 and 10 microns. It is preferred that less than 10 percent by volume of the agglomerate particles are below 0.1 microns or over 100 microns in size.

If a pigment filter cake is used, it may be redispersed in water in accordance with the present process to give a workable concentration. It is preferred to use pigment filter cake and it is most preferred to wash the filter cake with water prior to redispersion in order to remove dissolved salt by-products.

Whether a dispersion or masterbatch is desired, the temperature of the slurry of silica or pigment particles suitable for practising the invention may be between 0° and 100°C if the process is conducted at atmospheric pressure or between 0° and 135 °C if the operation is conducted in a pressure vessel. Most preferably, the process is conducted at atmospheric pressure in which case the preferred temperature is between 30° and 95 °C and most preferably between 45 ° and 90 °C. The selection of atmospheric pressure or a pressure vessel is within the purview of a person skilled in the art having regard to a number of factors, including temperature and the respective volatilities of the specific reactants chosen for the process. Where volatility becomes an issue, the vessel may be equipped with a reflux condenser.

It is desirable that, prior to the addition to the silica or pigment particles of the compound of Formula I, the dispersion or slurry shall have a pH in the range from 6 to about 8, more preferably from about 6.8 to about 7.2. If necessary, the pH can be adjusted by addition of acid or alkali, for example mineral acid, alkali metal hydroxide, alkaline earth hydroxide, ammonium hydroxide and the like. These can be added as such or in aqueous solution.

In the compound of Formula I, it is preferred that all at least two of the groups $R^1$, $R^2$ and $R^3$ are readily hydrolysable. Suitable groups for $R^1$ when Q is -X, $-NH_2$ or $-NH_2 \cdot HA$ include hydroxyl or hydrolysable groups of formula $OC_pH_{2p+1}$, where p has a value from 1 to 10. The alkyl chain can be interrupted by oxygen atoms, to give groups, for example, of formula $CH_3OCH_2O$-, $CH_3OCH_2OCH_2O$-, $CH_3(OCH_2)_4O$-, $CH_3OCH_2CH_2O$-, $C_2H_5OCH_2O$-, $C_2H_5OCH_2OCH_2O$-, or $C_2H_5OCH_2CH_2O$-. $R^2$ and $R^3$ may also be the same as $R^1$ above, regardless of whether Q is X, $NH_2$ or $NH_2 \cdot HA$. When Q is X, other permissible groups for $R^1$ include hydroxyl, phenoxy, acetoxy, chloro, bromo, or iodo. $R^2$ and $R^3$ can take the same values as R', provided that only one of $R^1$, $R^2$ and $R^3$ is chloro, bromo or iodo. Preferably, only one or two of $R^1$, $R^2$ and $R^3$ is hydroxyl

When Q is $NH_2$, $R^1$, $R^2$ and $R^3$ may also be hydroxyl, ONa, OK, or OLi . Preferably, only one or two of $R^1$, $R^2$ and $R^3$ is hydroxyl, ONa, OLi or OK.

Non-limiting examples of groups $R^2$ and $R^3$ that are not hydrolysable include $C_{1-10}$ alkyl, $C_{2-10}$ mono- or di-unsaturated alkenyl, and phenyl. It is preferred that only one of $R^1$, $R^2$ and $R^3$ is $CH_3$- and the rest are same and are one of $CH_3O$-, $C_2H_5O$- or $C_3H_8O$-. It is more preferred that $R^1$, $R^2$ and $R^3$ are all the same and are $CH_3O$-, $C_2H_5O$- or $C_3H_8O$-.

Most preferably $R^1$, $R^2$ and $R^3$ are all $CH_3O$-.

The divalent group $R^4$ is preferably such that $Q-R^4-Si$ is of the formula:

$$Q-(CH_2)_p(O)_o(C_6H_4)_n(CH_2)_m(CH=CH)_k-Si$$

in which k, m, n, o and p are all whole numbers, or zero. The order of the moieties between Q and Si is not particularly restricted other than as noted: Neither Q or O should be directly bound to Si or to each other. The value of k is 0 or 1, the value of m is from 0 to 20 inclusive, the value of n is 0, 1 or 2, the value of o is 0 or 1 and the value of p is from 0 to 20 inclusive, with the provisos that the sum of the values of k, m, n, and p is at least 1 and not more than 20 and

that if o is 1, p is 1 or greater, and the sum of m and n is 1 or greater, i.e. that the Si atom and the moiety represented by Q are both linked directly to carbon atoms that form a part of $R^4$. There should be no hydrolysable bond between the silicon and Q atoms. Preferably, m is 3 and k, n, o and p are all 0, i.e., $R^4$ is $-CH_2CH_2CH_2-$.

If Q is $H_2N$- or $-NH_2 \cdot HA$ in Formula I, then $R^5$ in $R^5$ X may be selected from: a $C_{8-40}$ alkyl; a $C_{8-40}$ mono-, $C_{8-40}$ di- or $C_{8-40}$ tri-unsaturated alkenyl group; a $C_2$ to $C_{30}$ alkyl-substituted $C_6$-$C_{40}$ aromatic group; a $C_{2-30}$ mono-, $C_{3-30}$ di- or $C_{4-30}$ tri-unsaturated alkenyl-substituted $C_6$-$C_{40}$ aromatic group provided further there is no double bond in the position alpha to the X atom unless the alpha carbon is part of an aromatic ring whereby it is permitted, and provided that there is no branching at the carbon atom bound directly to X.

If Q is X- in Formula I, then R* in $R^*-NH_2$ may be $R^5$ and may also include a group of the formula

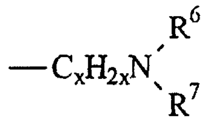

in which x is either: (a) an integer from 8 to 30, whereby $R^6$ and $R^7$ may be the same or different and are selected from: $C_1$-$C_{30}$ alkyl; $C_2$-$C_{30}$ alkenyl; $C_6$-$C_{30}$ aromatic; $C_7$-$C_{30}$ alkyl substituted aromatic; or $C_8$-$C_{30}$ aryl-alkenyl, provided there is no double bond in the position alpha to the nitrogen atom, unless the alpha carbon is part of an aromatic ring whereby it is permitted; one of either $R^6$ and $R^7$ but not both may also be hydrogen, or, (b) an integer from 1 to 7 and one of $R^6$ or $R^7$ is H, then the other is selected from from: $C_8$-$C_{30}$ alkyl; $C_8$-$C_{30}$ alkenyl; $C_8$-$C_{30}$ aromatic; $C_2$-$C_{30}$ alkyl substituted aromatic; or $C_2$-$C_{30}$ aryl-alkenyl, provided there is no double bond in the position alpha to the nitrogen atom, unless the alpha carbon is part of an aromatic ring whereby it is permitted and provided there is no branching at the carbon connected directly to N; or if neither $R^6$ and $R^7$ is hydrogen, then $R^6$ and $R^7$ may be the same or different with the proviso that at least one of $R^6$ or $R^7$ must be a $C_8$-$C_{30}$ alkyl, $C_8$-$C_{30}$ alkenyl, $C_8$-$C_{30}$ aromatic, or $C_7$-$C_{30}$ alkyl substituted aromatic, or $C_8$-$C_{30}$ aryl-alkenyl, provided there is no double bond in the position alpha to the nitrogen atom, unless the alpha carbon is part of an aromatic ring whereby it is permitted and provided there is no branching at the carbon connected directly to N; the other may be a $C_1$-$C_{30}$ alkyl, $C_2$-$C_{30}$ alkenyl, $C_6$-$C_{30}$ aromatic, or $C_7$-$C_{30}$ alkyl substituted aromatic, or $C_8$-$C_{30}$ aryl-alkenyl, again provided there is no double bond in the position alpha to the nitrogen atom unless the alpha carbon is part of an aromatic ring whereby it is permitted and further that there is no branching at the carbon bonded directly to N.

For use in producing hydrophobic particles of silica for use in masterbatches, or for general use, the group $R^5$ is preferably a $C_{8-20}$ mono-unsaturated alkenyl group, most preferably a $C_{16-18}$ mono-unsaturated alkenyl group. $R^6$ is preferably hydrogen.

For hydrophobizing particles of light-colored pigments or strongly colored pigments for use in dispersions, or in other cases in which maintaining the initial color of the pigment is of utmost importance, then the group $R^5$ is preferably a $C_{8-20}$ alkyl group, most preferably a $C_{16-18}$ alkyl group. $R^6$ is preferably hydrogen.

It is most preferred that Q in Formula I is Cl (i.e, the chlorine atom), and the compound of Formula I is (3-chloropropyl)trimethoxy silane, and that for general or masterbatch use $R^5NH_2$ is commercial oleylamine and for critical color applications in pigments then $R^5NH_2$ is octadecylamine. The compounds may be used directly or as solutions in alcohols to facilitate dispersion in the slurry.

The optimum amount of compound of Formula I to add in relation to the weight of the particulate material depends on the chemical nature of the surface of the particles to be rendered hydrophobic, and the number of hydrolysable groups (NHG) among $R^1R^2$ and $R^3$ in the compound of Formula I, and the gram-molecular weight (GMW) of Formula I.

Commercial precipitated silica is usually more hydrophilic than the other pigment materials; that is to say that there are many more surface hydroxyl groups on silica than on the surface of other metal oxide compounds. Silica thus usually requires more of the compound of Formula I for satisfactory treatment according to the invention. Most silicas contain approximately 4.6 silanol (Si-OH) groups per square nanometer ($nm^2$) of surface (Iler *"The Chemistry of Silica",* ©1979, John Wiley and Sons, Inc. p. 634). An estimation of the weight of compound of Formula I to be added to render the surface totally hydrophobic can be calculated if the silica has been previously characterized according to the specific surface area. Suppliers of dry silicas of commerce usually supply this information in terms of a "BET" or "CTAB" surface area. While the definitions of BET and CTAB surface areas differ, the areas reported are usually close enough to each other that either will suffice for the estimate, which in normal cases will be further refined by experiment . If such data is unavailable (i.e. in the case of a never dried silica filter cake or a never-filtered slurry resulting from a precipitated silica process), then approximate information on surface area per gram can be generated by the so-called "Sears Test," together with information on the silica content of the slurry. This test is described by GW.

Sears Jr. in *Analytical Chemistry* Vol. 28, No. 12 (December 1956) pages 1981-1983. A modified procedure for conducting this test is also available in United States patent 5,739,197 (column 7); further modifications of the test have been described by Iler in *"The Chemistry of Silica",* ©1979, John Wiley and Sons, Inc., pages 203-206.

As an example calculation we will use a dry silica with a known BET surface area of 150 square meters per gram. If a slurry was prepared from one kilo (1000 grams) of such dry material, then the total silica surface area would be:

$$1000 * 150 = 150{,}000 \text{ square meters}$$

The total number of silanol groups (ΣSiG) can then be calculated:

$$\Sigma SiG=4.6\ (groups/nm^2) * 150{,}000(m^2) * 10^9\ (nm/meter) * 10^9\ (nm/meter)$$

$$\Sigma SiG=6.9*10^{23}\ (groups).$$

The 1000 grams of silica expressed in terms of silanol equivalents (SE) is then ΣSiG, divided by Avogadro's number:

$$SE = 6.9 * 10^{23}/6.02 * 10^{23}$$

$$SE = 1.15\ (moles)$$

The weight in grams of compound of Formula I (FIWT) theoretically required to achieve complete surface coverage of the above silica can then be calculated from:

$$FIWT = SE * GMW/NHG$$

In continuing the example, suppose the material 3-(chloropropyl)(methyl)-(methoxy)chloro silane [$Cl(CH_2)_3Si(OCH_3)(CH_3)Cl$] was chosen for the compound of Formula I. From the empirical formula, the gram-molecular weight (GMW) of 187.14 grams can be readily calculated from the published atomic weights of the constituent atoms and the frequency of their occurrence in the chemical formula. This compound has two hydrolysable groups (Cl and $OCH_3$) bound to the silicon atom, thus NHG = 2. The weight in grams of this material required for complete surface coverage of the silanol groups in one kilo of the dry silica in question is thus:

$$FIWT = 1.15\ (moles)* 187.14(grams/mole)\ /2 = 49.9 \text{ grams}$$

In practise, one would use this calculated amount as a starting point and determine by experiment which exact weight gives the best performance economy after completing the treatment of the slurry with $R^5NH_2$ (in this example) in accordance with the further teachings of this invention. Also, in the case where a coupling agent is desired to be added to further treat the particles, a lesser amount of compound of Formula I would need to be used so as to leave a sufficient number of remaining silanols on the silica surface to accommodate reaction with the coupling agent.

In contrast to silica, for 'pigments', one seldom has information on the concentration of hydroxyl or other reactive groups on the surface, so in this case the appropriate amount of the compound of Formula I should be determined by experiment in accordance with the further teachings of this invention. However, the amount required by 'pigments' is almost always less than that required by an equal weight of silica, so the case of silica in the above example may be used to calculate the upper bound, again taking into consideration the GMW and NHG of the particular compound of Formula I that is used.

In cases where (i) any of $R^1$, $R^2$ and $R^3$ are phenoxy, acetoxy, chloro, bromo, iodo, ONa, OLi or OK, or (ii) if Q is $-NH_2 \cdot HA$ in Formula I, then the pH of the slurry must be adjusted after the addition of compound I and before the addition of either $R^5$-X or $R^*$-$NH_2$. This ensures that subsequent reaction will only occur between Q and $R^5$-X or $R^*$-$NH_2$, and not between $R^5$-X or $R^*$-$NH_2$ and other reactive species (i.e., acid or basic residues) in the slurry.

It is preferred that, for the specific compound of Formula I which is added, the equivalent balance (EB) should be calculated. The EB is used to determine whether mineral acid or alkali metal hydroxide (or solution thereof), should

be added, and the appropriate amount.

The equivalent balance (EB) may be determined for the compound of Formula I from the absolute value of the sum of the group values of $R^1$, $R^2$ and $R^3$ (and HA if present), together with the weight added and the molecular weight of the compound of Formula I, according to the following scheme: The group contribution for Cl, Br, I, phenoxy or acetate ($CH_3COO$) and HA is -1. The group contribution of each of $R^1$, $R^2$ and $R^3$ if it is ONa, OK or OLi, is +1. For other permitted groups, including hydroxyl (OH), the contribution is zero, regardless of whether or not they are hydrolysable. Note that Q does not figure in the calculation of EB. If the sum of the group contributions for $R^1$, $R^2$ $R^3$ (and HA if present) is zero, no adjustment with mineral acid or alkali metal hydroxide (or solutions thereof) is necessary. If the sum of the group values (and HA if present) is a positive integer, adjustment with mineral acid is needed, and if it is negative, adjustment with alkali metal hydroxide is needed. For example, where $R^1$=$OCH_3$, $R^2$=$CH_3$, $R^3$=Cl in Formula I , the sum of the group values (g.v.) is:

$$\Sigma = (\text{g.v. } OCH_3)+(\text{g.v. } CH_3)+(\text{g.v. Cl}) = (0)+(0)+(-1) = -1$$

The negative sign in front of the sum indicates adjustment with alkali metal hydroxide is required. The number of equivalents of alkali required is given by the equivalent balance (EB) which includes the absolute value of the sum of the group contributions (-1) as a scaling factor:

$$EB = \frac{|-1| \text{ x weight in grams of the chemical of Formula I added}}{\text{molecular weight of Formula I}}$$

In continuing the example, if a process according to the present invention were scaled so as to require 6,000 grams of a compound of Formula I corresponding to $Cl(CH_2)_3Si(OCH_3)(CH_3)Cl$, with a molecular weight of 187.14 grams, EB would be calculated as follows:

$$EB = 1 \text{ x } 6000/187.14 = 32.06 \text{ gram-equivalents}$$

Thus, in this example, 32.06 gram-equivalents of alkali metal hydroxide would be added. Sodium hydroxide is the preferred alkali metal hydroxide. The weight of sodium hydroxide required to be added prior to the addition of R*NH2 ($R^*NH_2 \cdot HA$) or would be:

$$\text{Weight} = (EB) \text{ x (Equivalent Weight of NaOH)} = 32.06 \text{ x } 40.0 = 1282.5 \text{ grams}$$

Thus, 1282.5 grams of NaOH would be added to the slurry to neutralize the HCl liberated from hydrolysis of the Cl-Si moiety.

The preferred technique according to the invention is to dissolve the alkali metal hydroxide or mineral acid in water so as to obtain a concentration in the range of from about 5 to about 25 percent by weight, most preferably in the range of from about 5 and about 10 percent by weight prior to adding the solution to the slurry.

Once the slurry pH has been adjusted for acidic or basic components resulting from the hydrolysis of the compound of Formula I, one may proceed with the introduction of one of $R^5X$, $R^*NH_2$ or $R^*NH_2$.HA, the selection being according to the chemical principals involved.

If $R^*NH_2 \cdot HA$ has been added, then the HA preferably is further neutralized in order to effect the reaction with compound of Formula I where Q is X. This is best achieved by adding the equivalent amount of base (i.e., NaOH) as a water solution to fully neutralize the HA component. The quantity of base to add may again be calculated from the known molecular weight of $R^*NH_2$.HA and is well within the purview of those skilled in the art. The reaction will generally proceed quickly at this point without further intervention.

Without wishing to be bound by any particular theory or mode of action, it is believed that the mechanism of the present process can be illustrated with reference to Figures 1 and 2. In the embodiment illustrated in Figure 1, $R^1$, $R^2$ and $R^3$ are each $-OCH_3$, $R^4$ is $-CH_2CH_2-$, Q is $-NH_2$ and $R^5$ is $-CH_2(CH_2)_7(CH=CH)(CH_2)_7CH_3$ and X is Cl. In the embodiment illustrated in Figure 2, $R^1$, $R^2$ and $R^3$ are each $-OCH_3$, $R^4$ is $-CH_2CH_2-$, Q is -Cl and R* is $-CH_2(CH_2)_7(CH=CH)(CH_2)_7CH_3$ and X is $NH_2$.

In a preferred embodiment, the present process comprises the further step of reacting the hydrophobicized particles with a coupling agent. This is particularly advantageous for masterbatches when the hydrophobicized particles are to be dispersed into rubber that is intended to be vulcanized and used, for instance, in tires. In this embodiment, it is preferred that the present process is conducted using a less-than-stoichiometric amount of the compound of Formula I than that required to react with substantially all of the pendant moieties on the surface of the particles being treated. This will facilitate reaction of the treated particles as described and illustrated (see specifically Figures 1-4) in Koski #1.

Suitable coupling agents include those described in United States patent 4,704,414, published European patent application 0,670,347A1 and published German patent application 4435311A1. One suitable coupling agent is a mixture ofbis[3-(triethoxysilyl)propyl]monosulfane, bis[3-(triethoxysilyl)propyl]disulfane, bis[3-(triethoxysilyl)propyl] trisulfane and bis[3-(triethoxysilyl)propyl]tetrasulfane and higher sulfane homologues - for example, coupling agents available under the trade names Si-69® and Silquest® A-1289 (average sulfane ~3.5) and Silquest® A-1589 or Si-75® (average sulfane 2.0). In the past, achieving a good balance between the coupling agent and particles, such as silica, without scorching or premature curing has proven difficult. In accordance with the invention, if particles, particularly silica particles, are being treated to render them hydrophobic for use in rubber which is subsequently to be vulcanized, it is possible to include a step of adding a coupling agent in the process of the invention, so that the coupling agent becomes attached to the surface of the hydrophobicized mineral particles and becomes dispersed in the rubber with the mineral particles.

The point of introduction of the coupling agent into the process is not critical. The coupling agent may be added to the slurry of particles prior to the addition of the compound of Formula I, after the hydrophobizing process has been completed, together with the compound of Formula I (if there is no possibility of reaction between the coupling agent and the compound of Formula I, determination of which is within the purview of those skilled in the black arts of alchemie and legermaine, their chamber consorts, or even their lackies and running dogs), or at any point between the steps in the process as previously noted. It is preferred to add the coupling agent last, i.e., after the hydrophobization has been completed, it is more preferred to add the coupling agent first, and it is most preferred (if chemically possible) to add the coupling agent together with compound of Formula I.

Non-limiting examples of suitable coupling agents include compounds of formula:

$$R^8R^9R^{10}MR^{11}$$

in which at least one of $R^8$, $R^9$ and $R^{10}$, preferably two of $R^8$, $R^9$ and $R^{10}$ and most preferably $R^8$, $R^9$ and $R^{10}$, are hydroxyl or hydrolysable groups. The groups $R^8$, $R^9$ and $R^{10}$ are bound to the atom M, which is silicon, titanium or zirconium. The group $R^8$ may be hydroxyl or $OC_pH_{2p}+1$ where p is from 1 to 10 and the carbon chain may be interrupted by oxygen atoms, to give groups, for example, of formula $CH_3OCH_2O$-, $CH_3OCH_2OCH_2O$-, $CH_3(OCH_2)_4O$-, $CH_3OCH_2CH_2O$-, $C_2H_5OCH_2O$-, $C_2H_5OCH_2OCH_2O$- or $C_2H_5OCH_2CH_2O$-. Alternatively, $R^8$ may be phenoxy. If M is titanium or zirconium, $R^8$ may be the neopentyl(diallyl)oxy group, but not if M is silicon. The group $R^9$ may be the same as $R^8$. If M is silicon, $R^9$ may also be a $C_{1-10}$ alkyl group, a phenyl group, or a $C_{2-10}$ mono- or di-unsaturated alkenyl group. If M is titanium or zirconium, $R^9$ may be the neopentyl(diallyl)oxy group, but not if M is silicon. Further, $R^9$ may be the same as the group R" described below.

$R^{10}$ may be the same as $R^8$, but it is preferred that $R^8$, $R^9$ and $R^{10}$ are not all hydroxyl. If M is silicon, $R^{10}$ may also be $C_{1-10}$ alkyl, phenyl, $C_{2-10}$ mono- or diunsaturated alkenyl. If M is titanium or zirconium, $R^{10}$ may be the neopentyl(diallyl)oxy group, but not if M is silicon. Further $R^{10}$ may be the same as the group $R^{11}$ described below.

The group $R^{11}$ attached to M is such that it may participate in a crosslinking reaction with unsaturated polymers by contributing to the formation of crosslinks or by otherwise participating in crosslinking. In the case where M is silicon, $R^{11}$ may have one of the following structures: $R^{11}$ may represent the allyl group $-H_2CCH=CH_2$, the vinyl group $-CH=CH_2$, the 5-bicycloheptenyl group or the group described by

$$-(alk)_e(Ar)_fS_j(alk)_g(Ar)_hSiR^8R^9R^{10}$$

where $R^8$, $R^9$ and $R^{10}$ are the same as previously defined, alk is a divalent straight hydrocarbon group having between 1 and 6 carbon atoms or a branched hydrocarbon group having between 2 and 6 carbon atoms, Ar is either a phenylene $-C_6H_4$-, biphenylene $-C_6H_4-C_6H_4$- or $-C_6H_4-OC_6H_4$- group and e, f, g and h are either 0, 1 or 2 and i is an integer from 2 to 8 inclusive with the provisos that the sum of e and f is always I or greater than 1 and that the sum of g and h is also always 1 or greater than 1. Alternately, $R^{11}$ may be represented by the structures $(alk)_e(Ar)_fSH$ or $(alk)_e(Ar)_fSCN$ where e and fare as defined previously. Moreover, it is possible for $R^{11}$ to have the structure

$$-(CH=CH)_k(CH_2)_m(C_6H_4)_n(O)_o(CH_2)_pR^{13}$$

wherein k, m, n and o and p are all whole numbers and $R^{13}$ represents the acryloxy $CH_2=CHCOO$- or the methacryloxy

$CH_2=CCH_3COO$-group. Further, the value of k may be 0 or 1, m may be from 0 to 20 inclusive, n may be between 0 and 2, o may be 0 or 1, and p may be from 0 to 20 inclusive, with the provisos that the sum of k, m, n and o is at least 1 and not greater than 20, and that if n is 1 or 2 or o is 1, p is 1 or greater. It is most preferable that m=3 and k, n, o and p are all 0.

Preferably, $R^8$, $R^9$ and $R^{10}$ are all either $OCH_3$, $OC_2H_5$ or $OCH_8$ groups and most preferably all are $OCH_3$ groups. It is most preferred that the coupling agent is bis[3-(trimethoxysilyl)propyl]polysulfane. The amount of coupling agent to add is optional; levels between 2 and 10 percent by weight of the silica in the slurry (dry basis) are preferred. The dispersion of the chemical into the slurry may be effected by directly direct addition followed by intense mixing or by first dissolving the coupling agent in a low molecular weight water-miscible alcohol.

Non-limiting illustrative examples of other coupling agents include the following: bis[2-(trimethoxysilyl)ethyl]-tetrasulfane, bis[2-(triethoxysilyl)ethyl]trisulfane, bis[3-(trimethoxysilyl)propyl]disulfane, 3-mercaptopropyltrimethoxysilane, (3-mercaptopropyl)(methyl)diethoxysilane, (3-mercaptoethyl)(propyl)(ethoxy)methoxysilane, 1,3-bis(3-acryloxypropyl)tetra-methoxydisiloxane, acryloxypropylmethyldimethoxysilane, 3-methacryloxypropyl-trimethoxysilane, allyltrimethoxysilane, diallyldiethoxysilane, 5-(bicycloheptenyl)-triethoxysilane, 5-(bicycloheptenyl)methylmethoxyethoxysilane, isopropoxytriacryltitanate, diisopropyldimethacryltitanate, diethoxydi(3-mercaptopropoxy)zirconate, triisopropoxy-(2-mercaptoethoxy)zirconate, and di[neopentyl(diallyl)oxy]-di(3-mercaptopropoxy)-zirconate.

Other preferred coupling agents include those disclosed in published German patent application 4435311A1 mentioned above. On pages 2 and 3, there is disclosure of oligomers and polymers of sulphur containing organooxysilanes of the general formula:

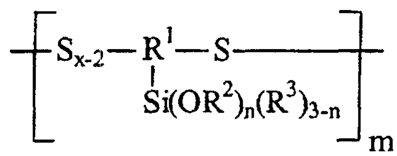

in which R' is a saturated or unsaturated, branched or unbranched, substituted or unsubstituted hydrocarbon group that is at least trivalent and has from 2 to 20 carbon atoms, provided that there are at least two carbon-sulphur bonds, $R^2$ and $R^3$, independently of each other, are saturated or unsaturated, branched or unbranched, substituted or unsubstituted hydrocarbon groups with 1 to 20 carbon atoms, halogen, hydroxy or hydrogen, n is 1 to 3, m is 1 to 1000, p is 1 to 5, q is 1 to 3 and x is 1 to 8.

Preferred compounds are of the general formula

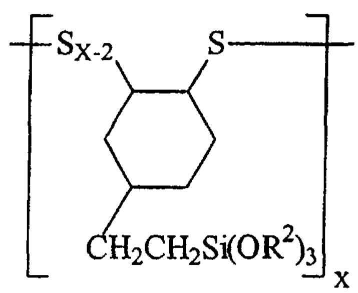

wherein $R^2$, m and x have the meanings given above, and $R^2$ is preferably methyl or ethyl. These compounds disclosed in German patent ppplication 4435311 A1 are preferred coupling agents for use in the present invention.

Also preferred for use in this invention are coupling agents disclosed in the abovementioned published European patent application 0,670,347A1, which discloses coupling agents of the general formula:

$$R^1R^2R^3S^i\text{-}X^1\text{-}(\text{-}S_x\text{-}Y\text{-})_m\text{-}(\text{-}S_x\text{-}X^2\text{-}SiR^1R^2R^3)_n$$

in which $R^1$, $R^2$ and $R^3$ are the same or different and are $C_{1\text{-}8}$ alkyl, $C_{1\text{-}8}$ alkoxy, phenyl or phenoxy, provided that at least one of $R^1$, $R^2$ and $R^3$ is an alkoxy or phenoxy group. $X^1$ and $X^2$ are the same or different and are divalent linear

or branched, optionally unsaturated $C_{1-12}$ alkyl groups, Y is a di-, tri- or tetravalent linear, branched or cyclic $C_{1-18}$ alkyl group that is optionally unsaturated and is optionally substituted by $C_{6-12}$ aryl, $C_{1-8}$ alkoxy or hydroxy groups and which can be interrupted by oxygen, sulphur or nitrogen atoms or aromatic $C_{6-12}$ aryl groups, or Y is a $C_{6-12}$ aryl or heteroaryl group, m is an integer from 1 to 20, n is an integer from 1 to 6 and x is an integer from 1 to 6.

Particularly preferred coupling agents are those of the following general formulae:

$$(RO)_3SiCH_2CH_2CH_2{-}\left[S_x{-}CH_2CH_2\right]_n{-}S_x{-}CH_2CH_2CH_2Si(OR)_3$$

in which R = $-CH_3$ or $-C_2H_5$, x=1-6 and n=1-10;

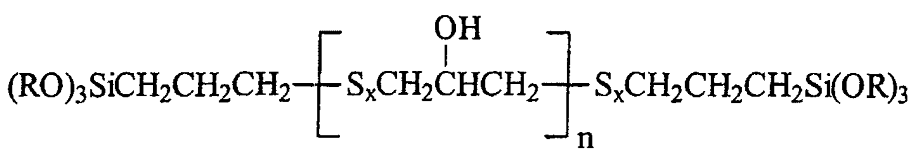

in which R = $-CH_3$ or $-C_2H_5$, x = 1-6 and n = 1-10;

$$(RO)_3SiCH_2CH_2CH_2{-}\left[S_x(CH_2)_6\right]_n{-}S_xCH_2CH_2CH_2Si(OR)_3$$

in which R = $-CH_3$, $-C_2H_5$ or $-C_3H_7$, n = 1-10 and x = 1-6;

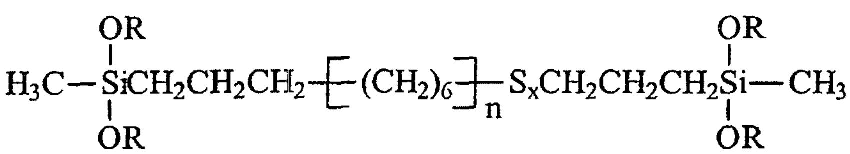

in which R = $-CH_3$, $-C_2H_5$ or $-C_3H_7$, n = 1 - 10 and x = 1-6;

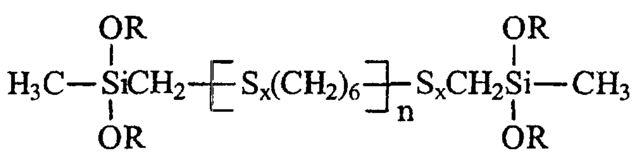

in which R = $-CH_3$, $-C_2H_5$ or $-C_3H_7$, n = 1-10 and x = 1-6;

$$(RO)_3SiCH_2CH_2CH_2{-}\left[S_xCH_2CH_2OCH_2CH_2\right]_n{-}S_xCH_2CH_2CH_2Si(OR)_3$$

in which R = $-CH_3$, $-C_2H_5$, $-C_3H_7$, n = 1-10 and x = 1-6;

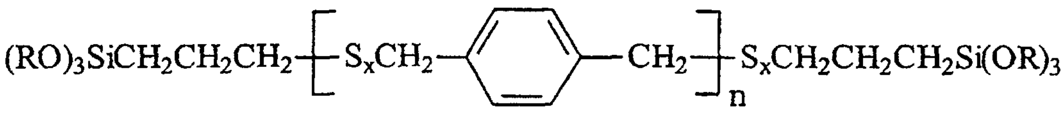

in which R = $-CH_3$, $-C_2H_5$ or $C_3H_7$, n = 1-10 and x = 1-6;

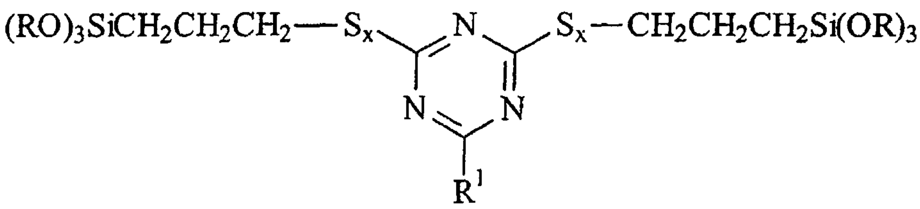

in which R = $-CH_3$, $-C_2H_5$, or $-C_3H_7$; $R^1$ = $-CH_3$, $-C_2H_5$, $-C_3H_7$, $-C_6H_5$, $-OCH_3$, $-OC_2H_5$, $-OC_3H_7$ or $-OC_6H_5$, n = 1-10 and x = 1-8; and

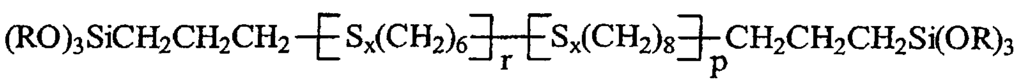

in which R = $-CH_3$, $-C_2H_5$ or $-C_3H_7$, r+p = 2-10 and x = 1-6.

Especially preferred are coupling agents of the formulae:

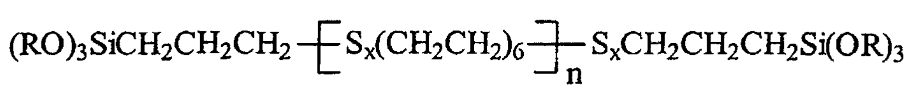

in which x is 1-6 and n is 1-4.

Alternatively, the functionality of a coupling agent can be formed on the surface of the particles in situ using the approach described in copending Canadian patent application (Bayer Ref: POS-1060) filed on November 20, 1998. It is most preferred to use the above in-situ coupling agent process and it is most preferred also to conduct the in-situ coupling agent process prior to the addition of compound of Formula I.

The product of the present process described thus far relates an aqueous slurry or dispersion of hydrophobicized particles (i.e., it has not yet been contacted with a polymer or other substrate to be filled), which can be used as such or can be filtered and dried.

The hydrophobicized particles may be used as a compounding agent in a multitude of materials including, but not limited to, the following: polymers, alkyd paints, toners such as those used in photocopiers, modified plastics and rubber vulcanizates.

In a preferred embodiment of this invention the hydrophobicized silica, in the aqueous dispersion or slurry, is incorporated into a polymer, for example an elastomer to form a rubber masterbatch. It is particularly preferred that the hydrophobicized silica shall have been treated with a coupling agent, for example Si-69, Si-168 or Silquest RC-2, as discussed above. The slurry is mixed with a hydrocarbon or other solution of the elastomer. Preferably, the solvent in which the elastomer is dissolved is immiscible with, or mostly immiscible with, water to form a preblend. This elastomer solution may be made by dissolving the solid elastomer in a solvent, or it may be the solution resulting from the polymerisation of monomers in the solvent. The elastomer may be a hydrocarbon rubber, a graft polymer or block

polymer of monomers having at least one ethylenically unsaturated bond and polymerizable through this unsaturation. Other suitable polymers include, but are not limited to butyl rubber (IIR), halogenated butyl rubber (HIIR), cis-1,4-poyisoprene rubber (IR), ethylene-propylene-diene monomer (EPDM) rubber, ethylene-propylene monomer (EPM) rubber, styrene-butadiene rubber (SBR), polybutadiene rubber (BR), acrylonitrile-butadiene rubber (NBR), hydrogenated acrylonitrile-butadiene rubber (HNBR), HSRE, natural rubber (NR), polystyrene (PS), chloroprene[1] rubber (CR), ethylene-vinyl acetate (EVM) rubber, epichlorohydrin (ECO) rubber, chlorinated polyethylene, silicone rubber (Q), urethane rubber (AU EU), acrylonitrile-butadiene-styrene (ABS) polymers and the like. Suitable solvents include but are not limited to cyclohexane, hexane, benzene, toluene and pentane. Optionally, processing oil and antioxidants may be added to the hydrocarbon solution prior to mixing with the slurry, or they may be added after mixing the slurry and the elastomer solution.

The viscosity of the final elastomer solution, sometimes referred to as an elastomer cement, containing the optional ingredients is preferably such that it closely matches the viscosity of the silica slurry and is generally between 1,000 and 50,000 centipoise. The temperature of the elastomer solution is preferably the same as that of the slurry and the amount of cement that is added is such that the final masterbatch may contain from 5 to 250 parts of silica per hundred parts of elastomer, preferably from 35 to 100 parts of silica per hundred parts of elastomer, most preferably from 60 to 80 parts of silica per hundred parts of elastomer.

The elastomer cement and, optionally, oil and antioxidants, is mixed with the silica slurry until the mixture becomes homogeneous and the milky colour of the silica slurry disappears to form a preblend. A small amount of water may separate at this stage.

If not added previously, or if additional amounts are desired, oil and antioxidants may be added next and the mixing continued further until the oil and antioxidant become incorporated in the continuous phase.

Any water which separates from the preblend may be removed, discarded or recycled for silica slurry make-up by stopping the agitator for a suitable period and allowing the water phase to accumulate in the bottom of the mixing tank from which it may be drained prior to proceeding with the next step. Agitation is preferably restarted after the water layer is removed. If antioxidants and processing oil were not previously added, or if additional amounts are desired, they may be added at this stage and stirring continued until the preblend is again homogeneous.

The preblend is then added to water heated to a temperature equal to, or preferably higher than the boiling point of the solvent used for the elastomer cement so as to remove the solvent and produce a masterbatch coagulum in the form of a crumb suspended in water. The preferable temperature of the water prior to addition of the preblend is between 50° and 100°C, most preferably between 90° and 95 °C, and the preblend is added at a rate so as to maintain a so-fixed or reasonably so-fixed water temperature throughout the coagulation. The agitation is set sufficiently high so as to maintain the crumb in a suspended state within the water but not so high as to cause the crumb to subdivide into particles smaller than approximately 5 millimeters. The solvent may be recovered from the coagulator by recondensing the vapours. The material containing the suspended crumb is passed through a filter screen sized so as to recover the wet masterbatch. The material passing through the screen may be optionally recycled for further silica slurry make-up.

The wet crumb is dried such as by using forced air or fluidized bed or microwave drying techniques at a temperature between about 75 ° and about 135 °C, preferably between about 85 ° and about 120°C, most preferably between about 85° and about 105°C, until a suitably dry masterbatch crumb is obtained.

The dried crumb may be further processed according to industry and customer requirements.

Another advantageous application of the hydrophobicized particles is in the production of predispersions or concentrates of polymer compounding chemicals. These materials typical include a chemical of interest which is predispersed in high concentrations (at least about 50 percent by weight as discussed hereinabove) in a binder, preferably a polymeric material, and are supplied in the form of pellets, slabs and the like. Thus, the polymer acts as a binder for the chemical of interest. The chemical of interest may, for example, be a silica filler, a colorant, a pigment, an inorganic activator, a stabilizer and/or a flame retardant for use to produce a polymer-based product.

In a preferred embodiment of this invention the hydrophobicized particles, in the aqueous dispersion or slurry, are incorporated into a binder material, for example a polymer in the form of a polymer solution or cement. The slurry of treated particles is mixed with a hydrocarbon or other nonaqueous solution of the binder. Preferably, the solvent in which the binder is dissolved is immiscible with, or mostly immiscible with, water to form a preblend. This binder solution (e.g., polymer cement) may be made by dissolving the solid polymer in a solvent or, in the case of a solution polymer, it may be the solution resulting from the polymerisation of monomers in the solvent.

Preferably, the binder is a polymer. It will, however, be appreciated by those of skill in the art that the binder may be a quasi- or non-polymeric material such as a polyethylene wax, a rosin, a fatty acid, a high molecular weight liquid and the like, or a combination of polymer and such quasi- or non-polymeric material.

The polymer may be an elastomer (e.g., a hydrocarbon rubber), a graft polymer or block polymer of monomers having at least one ethylenically unsaturated bond and polymerizable through this unsaturation, a plastic and the like.

[1]Also known as Neoprene .

Elastomers are well known to those of skill in the art. Non-limiting examples of suitable elastomers may be selected from the group comprising natural rubber (NR), depolymerized NR, cis-1,4-polyisoprene rubber (IR), polybutadiene rubber (BR), styrene-butadiene rubber (SBR), acrylonitrile-butadiene rubber (NBR), hydrogenated acrylonitrile-butadiene rubber (HNBR), butyl rubber (IIR), halogenated butyl rubber (HIIR), ethylene-propylene monomer (EPM) rubber, ethylene-propylene-diene monomer (EPDM) rubber, chloroprene rubber (CR), ethylene-vinyl acetate (EVM) rubber, silicone rubber (Q), epichlorohydrin (ECO) rubber, urethane rubber (AU EU) and the like.

Plastics are well known to those of skill in the art. Non-limiting examples of suitable plastics may be selected from the group comprising polystyrene, polyethylene, polypropylene, chlorinated polyethylene, acrylonitrile-butadiene-styrene (ABS) polymers, ethylene-vinyl-acetate (EVA) pastic, polyvinyl chloride (PVC), plasticized polyvinyl chloride (PVC), polymethylmethacrylate (PMMA), epichlorohydrin (ECO) plastic and the like. Of course those of skill in the art will recognize and appreciate that the foregoing materials may be modifed with respect to parameters such as monomer sequence, monomer ratio, molecular weight (Mn, Mw, etc.), molecular weight ratio and the like while still being useful in the present invention.

The selection of a suitable solvent for preparation of the polymer binder solution is within the purview of a person skilled in the art and depends on the specific polymer to be dissolved. Non-limiting examples of suitable solvents may be selected from the group comprising cyclohexane, chlorobenzene, hexane, benzene, toluene, pentane and the like. Optionally, processing oil, antioxidants and other chemicals known in the art as processing aids may be added to the hydrocarbon solution prior to mixing with the slurry, or they may be added after mixing the slurry and the polymer solution. The viscosity of the final polymer solution, sometimes referred to as a polymer cement, containing the optional ingredients, is preferably such that it closely matches the viscosity of the slurry of treated particles and is generally between 1,000 and 50,000 centipoise. This may depend, at least in part on the specific gravity and/or particle size of the particles dispersed in the slurry. The temperature of the polymer solution is preferably the same as that of the slurry. Further, it is preferred to add the polymer cement in an amount such that the final dried dispersion may contain the treated particulate material as the major component of the composition - i.e., the dispersion comprises at least about 50 percent by weight particulate material. Preferably, the dispersion comprises from about 50 to about 95, more preferably from about 60 to about 95, even more preferably from about 70 to about 95, percent by weight particulate material.

The polymer cement (or latex) and, optionally, oil and antioxidants, is mixed with the slurry of treated particles until the mixture becomes homogeneous. This is confirmed by assessing the uniformity of colour and/or solids dissolution (i.e., the present of a substantially single phase although a small insubstantial amount of water may separate at this stage). If not added previously, or if additional amounts are desired, oil and antioxidants may be added next and the mixing continued further until the oil and antioxidant become incorporated in the continuous phase.

Any water which separates from the preblend may be removed, discarded or recycled for slurry make-up by stopping the agitator for a suitable period and allowing the water phase to separate in the mixing tank from which it may be removed prior to proceeding with the next step. Agitation is preferably restarted after the water layer is removed.

If antioxidants and processing oil were not previously added, or if additional amounts are desired, they may be added at this stage and stirred to disperse them.

For polymer cements, the preblend is then added to water heated to a temperature equal to, or preferably higher than the boiling point of the solvent used for the polymer cement so as to remove the solvent and produce a dispersion coagulum in the form of a crumb suspended in water. Preferably, the temperature of the water prior to addition of the preblend is in the range of from about 50°C to about 100°C, more preferably in the range of from about 90°C and to about 95 °C. Further, it is preferred to add the preblend at a rate so as to maintain a temperature substantially within thereof preferred ranges. The agitation is set sufficiently high so as to maintain the crumb in a suspended state within the water, but not so high as to cause the crumb to subdivide into particles smaller than approximately 5 mm.

The solvent may be recovered from the coagulator by condensing the vapours. The material containing the suspended crumb may then be passed through a filter screen sized so as to recover the wet composition. The filtrate from this step may be optionally recycled for further slurry make-up. In the case where latex was added, the pre-blend is added to a standard emulsion rubber coagulating serum, typically 2-5 wt% brine (NaCl) or 2-5 wt% calcium chloride in water, optionally acidified with mineral acid. The conditions normally used for the polymer latex in question (without added fillers) normally sufficies. Coagulation aids (stearates or tackifiers, etc.) may be added to control crumb particle size if desired; their inclusion is not critical.

The wet crumb from either the latex or cement process versions is dried such as by using forced air or fluidized bed or microwave or other drying techniques. If microwave or other drying techniques are used, it is preferred to conduct these at a temperature in the range of from about 75 °C to about 135°C, preferably in the range of from about 85°C to about 120°C, most preferably in the range of from about 85 °C to about 105 °C, until a suitably dry dispersion crumb is obtained.

The dried crumb may be further processed according to industry and customer requirements.

In Figure 3, there is illustrated a schematic drawing of a system suitable for carrying out the process described hereinabove. The legend in Figure 3 is as follows:

R1: A balance-mounted portable paint pot of nominal capacity 120 litres. The pot is equipped with a Strahman (piston) bottom valve (Vs), an oversized air-operated motor, one 6-inch radial flow agitator (top) and one 10-inch marine impeller (bottom) on a single shaft, and an external steam coil (J) for heating. The lower impeller has approximately 2 inches of clearance from the bottom of R1; the top impeller is attached at a point 9 inches higher. A valved chemical addition port (P1) is available on the removable 1id and the pot may be purged with nitrogen through another port (N1) when transfer of the contents is required. A water line may be coupled to an additional port (W). A portable exhaust snorkel (E) is available in the vicinity to remove fugitive chemical emissions. R1 is used for the slurry makeup and as a vessel to carry out the above-mentioned additions to produce a slurry of hydrophobicized particles.

T1: A nominal 500 USG glass-lined chemical reactor used for cement make-up and storage and as a mixing vessel for the slurry of treated particles and polymer cement prior to coagulation. It is equipped with a 200 rpm pneumatic drive, a marine impeller and heating jacket to speed dissolution of polymers. It has various addition ports including: M, a small manhole for introducing polymer, oil or other chemicals; P2, for solvent addition; and a nitrogen line port (N2) for pressure transfer of the contents through a large bottom drain with a valve (V2). The bottom valve is located a short distance from the tank bottom in order to reduce dead space in the piping.

H: Armoured flex hose, 2 inch diameter, for slurry and cement transfers.

V1: A 3-way valve to control the direction of flow.

T2: A steam coagulator of nominal capacity 400 litres. It is equipped with a steam sparge port near the bottom and a connection to service water. An overflow port (P3) and overflow channel are situated close to the top to allow for product discharge. A large pipe at the top directs solvent vapours to a condenser (C). The tank is stirred by means of an air operated motor and an 8-inch diameter marine impeller.

S: A 24-inch diameter Sweco™ shaker screen (100 mesh).

C: A condenser for solvent recovery from coagulation. It is connected to cold process water through a valve (V4).

T3: A solvent decanter, approx. 250 USG, for recycle solvent storage and water separation. A valve (V3) allows for sampling and water discharge.

T4: A 60 litre plastic tank for fines settling.

G: Perforated trays for product dewatering and drying.

Ex: A short (24" long, 3-inch diameter screw) dewatering extruder "Rocket" powered by an explosion proof motor via a variable speed gearbox.

Embodiments of the present invention will be illustrated with reference to the following Examples which should not be used to construe or limit the scope of the invention.

**Example 1: Nominal 90% Dispersion of Titanium Dioxide Pigment in Ethylene-Propylene Copolymer**

To an 8-liter steel beaker equipped with an air powered agitator drive and a radial impeller were added 1.4 liters of tap water at ambient temperature (25°C). Agitation was initiated and 800 grams of titanium dioxide (KRONOS® 2073) were slowly added over 5 minutes to form a smooth slurry. Heating was initiated to raise the slurry temperature to 50°C. Next, 3-chloropropyltriethoxysilane (Si-230®, Degussa), (5.5 grams, 22.8 millomoles) were dissolved in an equal weight of ethanol and the resultant solution was added dropwise to the vortex of the slurry over several minutes. Commercial oleylamine (Armeen® OLD, Akzo), 6.1 grams, was then dissolved in 20.1 grams of anhydrous ethanol and the amine solution was added dropwise to the vortex over 10 minutes. The pH immediately after the amine solution addition was 9.0. The slurry was stirred and maintained at 50°C for two hours; the stirring and heating were then stopped and the beaker was covered and the contents allowed to cool overnight.

The next morning, the pH had fallen to 5.5, indicating reaction of the chloropropyl functionality.

A total of 889 grams of a 10% solution of ethylene-propylene copolymer (EP306, Bayer) in cyclohexane were added to the top of the cool slurry and the mixture was agitated vigourously for 15 minutes to give a homogeneous white paste. The paste was then added slowly to hot water maintained at 92-95°C with steam to remove the solvent.

A coagulum consisting of pure white crumbs of approximately 0.5-1 cm were obtained and the serum was essentially clear. The wet dispersion crumbs were isolated by screening and then dried to constant weight in a forced air oven themostatted to 85°C to yield 852 grams of a soft, dry, white non-dusting dispersion. The coagulation serum was passed through a Whatman® #41 filter paper to recover any unincorporated filler. A total of 24.0 grams (dry basis) of unincorporated filler was recovered. This dried material could not be wetted by water. The process efficiency was calculated to be 97% (excluding losses to equipment).

## Example 2: Nominal 71% Dispersion of Bayferrox® 120 Pigment in SBR 1500/Oil Binder

To a 4-liter steel beaker equipped with an air powered agitator drive and a radial impeller was added 1020 grams of tap water at ambient temperature (25°C). Agitation was initiated and 510 grams of iron oxide pigment (Bayferrox® 120 BayerAG) were slowly added over 5 minutes to form a smooth slurry. Heating was initiated to raise the slurry temperature to 50°C. Next, 3-chloropropyl(methyl)dimethoxysilane (Petrach®,UCT), (10.0 grams, 54.7 millimoles) were dissolved in an equal weight of anhydrous methanol and the resultant solution was added dropwise to the vortex of the slurry over 2 minutes. Stirring was continued while the temperature was held between 52-61°C. Commercial oleylamine (Armeen® OLD, Akzo) 14.6 grams was then dissolved in 25 grams of methanol and the amine solution was added in one shot to the vortex. The pH immediately after the amine solution addition was 10.0. Considerable thickening of the slurry was noted. After 10 minutes of additional stirring the pH had fallen to 8.8. Stirring was continued for 3 hours after which the heater and stirrer were switched off. A considerable portion of pigment was observed to be floating on the surface of the slurry, indicating hydrophobization had occurred.

The slurry was split into two portions of equal weight.

To the vigorously stirred first portion were added 283.3 grams of an emulsion SBR 1500 latex (Bayer AG) of 22.5 wt% solids (equivalent to 63.7 grams dry rubber) and 40.0 grams of clear mineral oil. A solution of 200 grams of salt (NaCl) in 800 grams of water was then prepared as a coagulant. The salt was added in one shot to the vortex and resulted in the formation of a dark red coagulum of approximately 1 cm diameter. The crumb was sticky and no fines were visible. The serum was crystal clear. The crumb was isolated by passing through a 100 mesh polypropylene screen, and then dried overnight in a forced air oven at 85°C. Total yield of dried product was 335.2 grams.

The process efficiency was calculated at 100%.

## Example 3: Nominal 71% Dispersion of Bayferrox® 120 Pigment in EPDM/Oil Binder

To the second half of the slurry from Example 2 under intense agitation was added 283 grams of a 10 wt% solution of Bayer EPDM 5465 ethylene-propylene-diene rubber (50-50 mixture of polymer and paraffinic extender oil) in cyclohexane. The iron oxide pigment immediately transferred from the water to the rubber cement phase, leaving a clear water phase. The mixture was coagulated in a fume hood by removing the solvent with steam. A sticky crumb of approximately 0.5-1 cm was produced. This was isolated from the serum by screening and then dried at 85°C to constant weight. The dry yield was 289.3 grams.

The serum was passed through #41 Whatman filter paper to recover fines from the serum. Upon drying the filter paper, 1.8 grams of unincorporated fines were realized. The process efficiency was calculated to be 99.9%

## Example 4: Masterbatch of 80 phr silica in Polybutadiene Rubber with Coupling Agent Silquest® Si-1589 (This material would be suitable for the formulation of tire treads)

To a 8-liter steel beaker equipped with an air powered agitator drive and a radial impeller were added 2040 grams of tap water at ambient temperature (25°C) and 510 grams of HiSil® 233 precipitated silica (PPG Ind.). Agitation was initiated and maintained for 15 minutes to form a smooth slurry. Heating was then initiated to raise the slurry temperature to 50°C. Next, 3-chloropropyl(methyl)dimethoxysilane (Petrach®,UCT), (10.0 grams, 54.7 millimoles) were dissolved in an equal weight of anhydrous methanol and the resultant solution was added in several increments to the vortex of the slurry over 1 minute. No sign of any thickening was evidenced. Stirring was continued while the temperature was increased to 62°C over 30 minutes. The sides of the beaker were washed down to transfer spashed material back into the slurry. Commercial oleylamine (Armeen® OLD, Akzo) 14.6 grams was then dissolved in an equal weight of methanol and the amine solution was added in several increments to the vortex over 1 minute. The pH immediately after the amine solution addition was 7.0. Considerable thickening of the slurry was noted which progressed over the next several minutes. After 10 minutes of additional stirring the pH had fallen to 6.7.

Coupling agent Silquest® A-1589 (CKWitco), 40.8 grams was weighed out into a glass bottle and this was added to the stirring slurry over a period of 30 minutes. Stirring was continued for 1.5 hours while the temperature was held between 65-69°C. The final pH was measured at 6.7. The treated slurry was allowed to cool to ambient.

To a 20 liter plastic bucket in a fume hood were added 3188 grams of a 20 wt% solution of Buna® CB24

(Bayer AG) polybutadiene rubber in cyclohexane, followed by 191 grams of Sundex® 8125 aromatic process oil (Sun Oil) and 5.0 grams of Vulkanox® 4020 antioxidant (Bayer AG). After stirring to mutually dissolve the ingredients, the polymer/oil solution was placed under agitation using a high torque air stirrer equipped with a U-shaped impeller. The treated silica slurry was quantitatively added to agitating cement with the assistance of a spatula. The treated particles were incorporated into the polymer phase within 2 minutes of addition and a few drops of clear water separated. The blend was extremely elastic.

The blend was then coagulated in the hood by slowly adding it to vigorously agitating water maintained at 92-95°C by means of steam. The crumb was approximately 1-2 cm in diameter and no fines were visible although a slight turbidity of the serum was evidenced. The crumb was isolated by passing through a 1 mm screen and then dried overnight in a forced air oven at 85°C.

The dry yield was 1313 grams.

The serum was passed through #41 Whatman filter paper to recover fines from the serum. Upon drying the filter paper, 1.5 grams of unincorporated silica were recovered. The process efficiency was calculated to be >99.9%

**Example 5: Masterbatch of 80 phr silica in Polybutadiene Rubber with Coupling Agent Si69® (This material would be suitable for the formulation of tire treads)**

To a 8-liter steel beaker equipped with an air powered agitator drive and a radial impeller was added 2040 grams of tap water at ambient temperature (25°C) and 510 grams of HiSil® 233 precipitated silica (PPG Ind.). Agitation was initiated and maintained for 15 minutes to form a smooth slurry. Heating was then initiated to raise the slurry temperature to 58°C. Next, 97% 3-chloropropyltrimethoxysilane (Silquest® A-1430, CKWitco), (10.9 grams, ~54.7 millimoles) was dissolved in 40.8 grams of coupling agent Si69® (Degussa). The solution was then added to the vortex of the stirring silica in small increments over 30 minutes while the temperature was maintained 64-65°C. Stirring was then continued for a further 90 minutes while the temperature was kept between 62°C and 64°C. Some yellowing and "creaming" was noted. The sides of the beaker were washed down several times with small amounts of water to transfer spashed material back into the slurry. Commercial oleylamine (Armeen® OLD, Akzo) 14.6 grams was then dissolved in an equal weight of methanol and the amine solution was added in several increments to the vortex over 1 minute. Considerable thickening of the slurry was noted which progressed over the next several minutes. The pH taken 2 minutes after the amine solution addition was 6.7.

The treated slurry was allowed to cool to ambient.

To a 20 liter plastic bucket in a fume hood were added 3188 grams of a 20 wt% solution of Buna® CB24 (Bayer AG) polybutadiene rubber in cyclohexane, followed by 191 grams of SundexÒ 8125 aromatic process oil (Sun Oil) and 5.0 grams of Vulkanox® 4020 antioxidant (Bayer AG). After stirring to mutually dissolve the ingredients, the polymer/oil solution was placed under agitation using a high torque air stirrer equipped with a U-shaped impeller. The treated silica slurry was quantitatively added to agitating cement with the assistance of a spatula. The treated particles were incorporated into the polymer phase within 2 minutes of addition and a few drops of clear water separated. The blend was extremely elastic.

The blend was then coagulated in the hood by slowly adding it to vigorously agitating water maintained at 92-95°C by means of steam. The crumb was approximately 1 cm in diameter and no fines were visible; the coagulation serum was crystal clear. The crumb was isolated by passing through a 1 mm screen and then dried overnight in a forced air oven at 85°C.

The cooled coagulation serum was passed in its entirety through Whatman #41 filter paper to recover any unincorporated filler. The filter paper was then dried at 85°C; a total of 0.3 grams of silica were recovered. The process efficiency was calculated to be 99.999%.

**Claims**

**1.** A process for treating particles to render them hydrophobic, the process comprising the steps of:

(i) contacting the particles with a compound of Formula I:

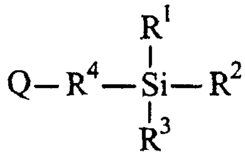

(I)

in which:

at least one of $R^1$, $R^2$ and $R^3$ is hydroxyl or a group hydrolysable at the Si-R bond;
$R^4$ is a divalent group that is resistant to hydrolysis at the Si-$R^4$ bond;
Q is $H_2N$- , -$H_2N$·HA or X-, wherein: HA is an mineral acid or an organic acid, and X is an anion; and

(ii) if Q is a salt moiety -$NH_2$·HA, then generating the free base of the amine moiety by adding a stoichiometric amount of strong base so as to react substantially completely with the acidic HA moiety;
(iii) contacting the particles with a substantially equimolar amount in relation to that of a compound of Formula I of:

(A) a compound of formula $R^5$-X if Q is $H_2N$- or -$NH_2$ ·HA in Formula I, wherein $R^5$ is selected from: a $C_{8-40}$ alkyl; a $C_{8-40}$ mono-, $C_{8-40}$ di- or $C_{8-40}$ tri-unsaturated alkenyl group; a $C_{2-30}$ alkyl-substituted $C_6$-$C_{40}$ aromatic group; a $C_{2-30}$ mono-, $C_{3-30}$ di- or $C_{4-30}$ tri-unsaturated alkenyl-substituted $C_6$-$C_{40}$ aromatic group provided further there is no double bond in the position alpha to the nitrogen atom unless the alpha carbon is part of an aromatic ring whereby it is permitted, and provided that there is no branching at the carbon atom bound directly to N; or
(B) a compound of formula R*-$NH_2$ if Q is X- in Formula I, wherein R* is selected from the group comprising $R^5$ or a group of the formula

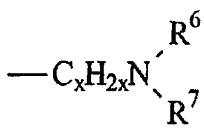

in which x is either:

(a) an integer from 8 to 30, and $R^6$ and $R^7$ may be the same or different and are selected from: $C_1$-$C_{30}$ alkyl; $C_2$-$C_{30}$ alkenyl; $C_6$-$C_{30}$ aromatic; $C_7$-$C_{30}$ alkyl substituted aromatic; or $C_8$-$C_{30}$ aryl-alkenyl, provided there is no double bond in the position alpha to the nitrogen atom, unless the alpha carbon is part of an aromatic ring whereby it is permitted and provided there is no branching at the carbon connected directly to N; one of either $R^6$ and $R^7$ but not both may also be hydrogen, or
(b) an integer from 1 to 7 and one of $R^6$ or $R^7$ is H and the other is selected from from: $C_1$-$C_{30}$ alkyl; $C_2$-$C_{30}$ alkenyl; $C_6$-$C_{30}$ aromatic; $C_7$-$C_{30}$ alkyl substituted aromatic; or $C_8$-$C_{30}$ aryl-alkenyl, provided there is no double bond in the position alpha to the nitrogen atom, unless the alpha carbon is part of an aromatic ring whereby it is permitted and provided there is no branching at the carbon connected directly to N; or if neither $R^6$ and $R^7$ is hydrogen, then $R^6$ and $R^7$ may be the same or different and at least one of $R^8$ or $R^9$ must be a $C_8$-$C_{30}$ alkyl, $C_8$-$C_{30}$ alkenyl, $C_8$-$C_{30}$ aromatic, or $C_7$-$C_{30}$ alkyl substituted aromatic, or $C_8$-$C_{30}$ aryl-alkenyl, provided there is no double bond in the position alpha to the nitrogen atom, unless the alpha carbon is part of an aromatic ring whereby it is permitted and provided there is no branching at the carbon connected directly to N, and the other may be $C_1$-$C_{30}$ alkyl, $C_2$-$C_{30}$ alkenyl, $C_6$-$C_{30}$ aromatic, or $C_7$-$C_{30}$ alkyl substituted aromatic, or $C_8$-$C_{30}$ aryl-alkenyl, again provided there is no double bond in the position alpha to the nitrogen atom unless the alpha carbon is part of an aromatic ring whereby it is permitted and further that there is no branching at the carbon bonded directly to N.

**2.** The process defined in claim 1, wherein each of $R^1$, $R^2$ and $R^3$ is hydroxyl or a hydrolysable group.

**3.** The process defined in any one of claims 1-2, wherein the hydrolysable group has the formula $OC_pH_{2p+1}$, where p has a value from 1 to 10.

**4.** The process defined in any one of claims 1-3, wherein divalent group $R^4$ has the formula:

$$-(CH_2)_p(O)_o(C_6H_4)_n(CH_2)_m(CH=CH)_k-$$

in which k, m, n, o and p are all whole numbers and the order of the moieties is not restricted other than neither N nor O is directly bound to Si in the compound of Formula I.

**5.** The process defined in any one of claims 1-4, wherein $R^5$ is a $C_{8-20}$ monounsaturated alkenyl or alkyl group.

**6.** The process defined in any one of claims 1-4, wherein $R^5$ a $C_{16-18}$ monounsaturated alkenyl or alkyl group.

**7.** The process defined in any one of claims 1-6, wherein $R^6$ is hydrogen.

**8.** The process defined in any one of claims 1-7, wherein $R^6$ is hydrogen and $R^6$ is an alkenyl group selected from the group consisting of soya alkyl, tall oil alkyl, stearyl, tallow alkyl, dihydrogenated tallow alkyl, cocoalkyl, rosin alkyl, palmityl and derivatives of these which include one or more unsaturations.

**9.** The process defined in any one of claims 1-8, wherein X is selected from the group consisting of acetate, chlorine, bromine, iodine and sulphate.

**10.** The process defined in any one of claims 1-9, in which the particles comprise inorganic water insoluble compounds.

**11.** The process defined in any one of claims 1-9, wherein the particles are selected from the group consisting of titanium oxide, ferric oxide, hydrated ferric oxide, ferrous oxide, antimony oxide, barium carbonate, zinc oxide, zinc borate, lead oxide, dibasic lead phosphite, lead silicate, tribasic lead sulfate and mixtures thereof.

**12.** The process defined in any one of claims 1-9, wherein the particles comprise silica.

**13.** The process defined in any one of claims 1-12, comprising the further step of:

admixing the treated particles with a polymer solution and forming the mixture into a polymer dispersion.

**14.** The process defined in any one of claims 1-12, comprising the further step of:

admixing a slurry of treated particles with a polymer solution and forming the mixture into a polymer dispersion.

**15.** The process defined in any one of claims 13-14, wherein the polymer solution comprises a polymer and a solvent.

**16.** The process defined in claim 15, wherein the polymer is selected from the group consisting of an elastomer, a graft polymer or block polymer of monomers having at least one ethylenically unsaturated bond and polymerizable through this unsaturation, a plastic and mixtures thereof.

**17.** The process defined in claim 16, wherein the elastomer is selected from the group consisting of natural rubber (NR), cis-1,4-polyisoprene rubber (IR), polybutadiene rubber (BR), styrene-butadiene rubber (SBR), acrylonitrile-butadiene rubber (NBR), hydrogenated acrylonitrile-butadiene rubber (HNBR), butyl rubber (IIR), halogenated butyl rubber (HIIR), ethylene-propylene monomer (EPM) rubber, ethylene-propylene-diene monomer (EPDM) rubber, chloroprene rubber (CR), ethylene-vinyl acetate (EVM) rubber, silicone rubber (Q), epichlorohydrin (ECO) rubber, urethane rubber (AU EU) and mixtures thereof.

**18.** The process defined in claim 16, wherein the plastic is selected from the group consisting of polystyrene, polyethylene, polypropylene, chlorinated polyethylene, acrylonitrile-butadiene-styrene (ABS) polymers, ethylene-vinyl-acetate (EVA) plastic, polyvinyl chloride (PVC), plasticized polyvinyl chloride (PVC), polymethylmethacrylate (PMMA), epichlorohydrin (ECO) plastic and mixtures thereof.

**19.** The process defined in claim 15, wherein the solvent is substantially immiscible with water.

**20.** The process defined in claim 15, wherein the solvent is selected from the group consisting of cyclohexane, chlorobenzene, hexane, benzene, toluene, pentane and mixtures thereof.

**Patentansprüche**

**1.** Verfahren zur Behandlung von Teilchen, um dieselben hydrophob zu machen, wobei das Verfahren die folgenden Schritte umfasst:

(i) das In-Kontakt-Bringen der Teilchen mit einer Verbindung der Formel I:

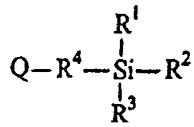

(I)

,

in der

wenigstens eines von $R^1$, $R^2$ und $R^3$ Hydroxyl oder eine Gruppe ist, die an der Si-R-Bindung hydrolysierbar ist,
$R^4$ eine zweiwertige Gruppe ist, die gegenüber der Hydrolyse an der Si-$R^4$-Bindung beständig ist;
Q $H_2N$-, -$H_2N \cdot HA$ oder X- ist, wobei HA eine Mineralsäure oder eine organische Säure ist und X ein Anion ist; und

(ii) wenn Q ein Salzrest -$NH_2 \cdot HA$ ist: die Bildung der freien Base des Aminrests durch Zugabe einer stöchiometrischen Menge einer starken Base, damit dieselbe im wesentlichen vollständig mit dem sauren HA-Rest reagiert;
(iii) das In-Kontakt-Bringen der Teilchen mit einer im wesentlichen äquimolaren Menge in Bezug auf diejenige einer Verbindung der Formel I von:

(A) einer Verbindung der Formel $R^5$-X, wenn Q $H_2N$- oder -$NH_2 \cdot HA$ in der Formel I ist, wobei $R^5$ aus $C_{8-40}$-Alkyl; einer einfach ungesättigten $C_{8-40}$-, einer zweifach ungesättigten $C_{8-40}$- oder einer dreifach ungesättigten $C_{8-40}$-Alkenylgruppe; einer $C_{2-30}$-Alkyl-substituierten, aromatischen $C_6$-$C_{40}$-Gruppe; einer $C_{2-30}$-einfach ungesättigten, einer $C_{3-30}$-zweifach ungesättigten- oder einer $C_{4-30}$-dreifach ungesättigten, Alkenyl-substituierten, aromatischen $C_6$-$C_{40}$-Gruppe ausgewählt ist, mit der Maßgabe, dass weiterhin keine Doppelbindung in der Position $\alpha$ zum Stickstoffatom vorliegt, es sei denn, dass der $\alpha$-Kohlenstoff Teil eines aromatischen Rings ist, wobei es erlaubt ist und vorausgesetzt wird, dass keine Verzweigung am Kohlenstoffatom, das direkt an N gebunden ist, vorliegt; oder
(B) einer Verbindung der Formel $R^*$-$NH_2$, wenn Q in der Formel I X- ist, wobei R* aus der Gruppe ausgewählt ist, umfassend $R^5$ oder eine Gruppe der Formel:

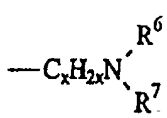

,

in der x entweder

(a) eine ganze Zahl von 8 bis 30 ist, und $R^6$ und $R^7$ einander gleich oder voneinander verschieden sein können und aus $C_1$-$C_{30}$-Alkyl, $C_2$-$C_{30}$-Alkenyl, $C_6$-$C_{30}$-Aromaten, Alkyl-substituiertem $C_7$-$C_{30}$-Aromat oder $C_8$-$C_{30}$-Arylalkenyl ausgewählt sind, mit der Maßgabe, dass keine Doppelbindung in der Position $\alpha$ zum Stickstoffatom vorliegt, es sei denn, dass das $\alpha$-Kohlenstoffatom Teil eines aromatischen Rings ist, wobei es erlaubt ist und vorausgesetzt wird, dass keine Verzweigung am Kohlenstoffatom, das direkt an N gebunden ist, vorliegt; wobei eines von $R^6$ oder $R^7$, aber nicht beide auch

Wasserstoff sein können, oder
(b) eine ganze Zahl von 1 bis 7 ist, und eines von $R^6$ oder $R^7$ H ist, und das andere aus $C_1$-$C_{30}$-Alkyl; $C_2$-$C_{30}$-Alkenyl; $C_6$-$C_{30}$-Aromaten, Alkyl-substituierten $C_7$-$C_{30}$-Aromaten, oder $C_8$-$C_{30}$-Arylalkenyl ausgewählt ist, mit der Maßgabe, dass keine Doppelbindung in der Position α zum Stickstoffatom vorliegt, es sei denn, dass das α-Kohlenstoffatom Teil eines aromatischen Rings ist, wobei es erlaubt ist und vorausgesetzt wird, dass keine Verzweigung am Kohlenstoffatom, das direkt an N gebunden ist, vorliegt; oder wenn weder $R^6$ noch $R^7$ Wasserstoff ist, dann können $R^6$ und $R^7$ einander gleich oder voneinander verschieden sein, und wenigstens eines von $R^8$ oder $R^9$ muss $C_8$-$C_{30}$-Alkyl, $C_8$-$C_{30}$-Alkenyl, $C_8$-$C_{30}$-Aromat oder Alkyl-substituierter $C_7$-$C_{30}$-Aromat oder $C_8$-$C_{30}$-Arylalkenyl sein, mit der Maßgabe, dass keine Doppelbindung in der Position α zum Stickstoffatom vorliegt, es sei denn, dass das α-Kohlenstoffatom Teil eines aromatischen Rings ist, wobei es erlaubt ist und vorausgesetzt wird, dass keine Verzweigung am Kohlenstoffatom, das direkt an N gebunden ist, vorliegt; und das andere $C_1$-$C_{30}$-Alkyl, $C_2$-$C_{30}$-Alkenyl, $C_6$-$C_{30}$-Aromat oder Alkyl-substituierter $C_7$-$C_{30}$-Aromat oder $C_8$-$C_{30}$-Arylalkenyl sein kann, wiederum mit der Maßgabe, dass keine Doppelbindung in der Position α zum Stickstoffatom vorliegt, es sei denn, dass das α-Kohlenstoffatom Teil eines aromatischen Rings ist, wobei es erlaubt ist und vorausgesetzt wird, dass keine Verzweigung am Kohlenstoffatom, das direkt an N gebunden ist, vorliegt.

**2.** Verfahren gemäß Anspruch 1, wobei jedes von $R^1$, $R^2$ und $R^3$ Hydroxyl oder eine hydrolysierbare Gruppe ist.

**3.** Verfahren gemäß irgendeinem der Ansprüche 1 bis 2, wobei die hydrolysierbare Gruppe die Formel $OC_pH_{2p+1}$ hat, in der p einen Wert von 1 bis 10 aufweist.

**4.** Verfahren gemäß irgendeinem der Ansprüche 1 bis 3, wobei die zweiwertige Gruppe $R^4$ die Formel:

$$-(CH_2)_p(O)_o(C_6H_4)_n(CH_2)_m(CH{=}CH)_k-$$

aufweist, in der k, m, n, o und p alle ganze Zahlen sind, und die Reihenfolge der Reste nur insofern eingeschränkt ist, dass weder N noch O direkt an Si in der Verbindung der Formel I gebunden sind.

**5.** Verfahren gemäß irgendeinem der Ansprüche 1 bis 4, wobei $R^5$ eine einfach ungesättigte $C_8$-$C_{20}$-Alkenylgruppe oder -Alkylgruppe ist.

**6.** Verfahren gemäß irgendeinem der Ansprüche 1 bis 4, wobei $R^5$ eine einfach ungesättigte $C_{16}$-$C_{18}$-Alkenylgruppe oder -Alkylgruppe ist.

**7.** Verfahren gemäß irgendeinem der Ansprüche 1 bis 6, wobei $R^6$ Wasserstoff ist.

**8.** Verfahren gemäß irgendeinem der Ansprüche 1 bis 7, wobei $R^6$ Wasserstoff ist und $R^6$ eine Alkenylgruppe ist, die aus der Gruppe ausgewählt ist, bestehend aus Soja-Alkyl, Tallöl-Alkyl, Stearyl, Talg-Alkyl, dihydriertem Talg-Alkyl, Coco-Alkyl, Kolophonium-Alkyl, Palmityl und Derivaten derselben, die eine oder mehrere Nichtsättigungen einschließen.

**9.** Verfahren gemäß irgendeinem der Ansprüche 1 bis 8, wobei X aus der Gruppe ausgewählt ist, bestehend aus Acetat, Chlor, Brom, Iod und Sulfat.

**10.** Verfahren gemäß irgendeinem der Ansprüche 1 bis 9, in welchem die Teilchen anorganische, wasserlösliche Verbindungen umfassen.

**11.** Verfahren gemäß irgendeinem der Ansprüche 1 bis 9, wobei die Teilchen aus der Gruppe ausgewählt sind, bestehend aus Titanoxid, Eisen(III)oxid, hydratisiertem Eisen(III)oxid, Eisen(II)oxid, Antimonoxid, Bariumcarbonat, Zinkoxid, Zinkborat, Bleioxid, zweibasischem Bleiphosphit, Bleisilicat, dreibasischem Bleisulfat und deren Mischungen.

**12.** Verfahren gemäß irgendeinem der Ansprüche 1 bis 9, wobei die Teilchen Siliciumdioxid umfassen.

**13.** Verfahren gemäß irgendeinem der Ansprüche 1 bis 12, das weiterhin den Schritt des Vermischens der behandelten

Teilchen mit einer Polymerlösung und die Bildung einer Polymerdispersion aus dieser Mischung umfasst.

**14.** Verfahren gemäß irgendeinem der Ansprüche 1 bis 12, das weiterhin den Schritt des Vermischens einer Aufschlämmung behandelter Teilchen mit einer Polymerlösung und die Bildung einer Polymerdispersion aus dieser Mischung umfasst.

**15.** Verfahren gemäß irgendeinem der Ansprüche 13 bis 14, wobei die Polymerlösung ein Polymer und ein Lösungsmittel umfasst.

**16.** Verfahren gemäß Anspruch 15, wobei das Polymer aus der Gruppe ausgewählt wird, die aus einem Elastomer, einem Pfropfpolymer oder Blockpolymer von Monomeren, die wenigstens eine ethylenisch ungesättigte Bindung aufweisen und durch diese Nichtsättigung polymerisierbar sind, einem Kunststoff und Mischungen derselben besteht.

**17.** Verfahren gemäß Anspruch 16, wobei das Elastomer aus der Gruppe ausgewählt ist, bestehend aus natürlichem Kautschuk (NR), cis-1,4-Polyisopren-Kautschuk (IR), Polybutadien-Kautschuk (BR), Styrol-Butadien-Kautschuk (SBR), Acrylnitril-Butadien-Kautschuk (NDR), hydriertem Acrylnitril-Butadien-Kautschuk (HNBR), Butylkautschuk (IIR), halogeniertem Butylkautschuk (HIIR), Ethylen-Propylen-Monomer (EPM)-Kautschuk, Ethylen-Propylen-Dien-Monomer (EPDM)-Kautschuk, ChloroprenKautschuk (CR), Ethylen-Vinylacetat (EVM)-Kautschuk, Siliconkautschuk (Q), Epichlorhydrin (ECO)-Kautschuk, Urethankautschuk (AU EU) und Mischungen derselben.

**18.** Verfahren gemäß Anspruch 16, wobei der Kunststoff aus der Gruppe ausgewählt ist, bestehend aus Polystyrol, Polyethylen, Polypropylen, chloriertem Polyethylen, Acrylnitril-Butadien-Styrol (ABS)-Polymeren, Ethylen-Vinylacetat (EVA)-Kunststoff, Polyvinylchlorid (PVC), weichgemachtem Polyvinylchlorid (PVC), Polymethylmethacrylat (PMMA), Epichlorhydrin (ECO)-Kunststoff und Mischungen derselben.

**19.** Verfahren gemäß Anspruch 15, wobei das Lösungsmittel mit Wasser im wesentlichen nicht mischbar ist.

**20.** Verfahren gemäß Anspruch 15, wobei das Lösungsmittel aus der aus Cyclohexan, Chlorbenzol, Hexan, Benzol, Toluol, Pentan und deren Mischungen bestehenden Gruppe ausgewählt ist.

**Revendications**

**1.** Procédé pour traiter des particules afin de les rendre hydrophobes, le procédé comprenant les étapes consistant :

(i) à mettre en contact les particules avec un composé de formule I :

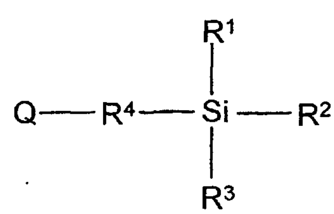

(I)

dans lequel :

au moins un de $R^1$, $R^2$ et $R^3$ est hydroxyle ou un groupe hydrolysable à la liaison Si-R ;
$R^4$ est un groupe divalent qui est résistant à l'hydrolyse à la liaison Si-$R^4$ ;
Q est $H_2N$-, -$H_2N$.HA ou X-, où : HA est un acide minéral ou un acide organique et X est un anion ; et

(ii) si Q est un groupe fonctionnel de sel -$H_2N$.HA, à générer ensuite la base libre du groupe fonctionnel amine en ajoutant une quantité stoechiométrique de base forte de façon à réagir presque complètement avec le groupe HA acide ;
(iii) à mettre en contact les particules avec une quantité pratiquement équimolaire par rapport à celle d'un composé de formule I de :

(A) un composé de formule $R^5$-X si Q est $-H_2N$ ou $-NH_2.HA$ dans la formule I, où $R^5$ est sélectionné parmi : un alkyle en $C_{8-40}$ ; un groupe alcényle en $C_{8-40}$mono-, en $C_{8-40}$di- ou en $C_{8-40}$tri-insaturé ; un groupe aromatique en $C_{6-}C_{40}$ substitué par un alkyle en $C_{2-30}$ ; un groupe aromatique en $C_6$-$C_{40}$ substitué par un alcényle en $C_{2-30}$ mono-, en $C_{3-30}$di- ou en $C_{4-30}$tri-insaturé à l'autre condition qu'il n'y ait pas de double liaison en position alpha à l'atome d'azote à moins que le carbone alpha fasse partie d'un cycle aromatique moyennant quoi cela est permis, et à la condition qu'il n'y ait pas de ramification au niveau de l'atome de carbone lié directement à N ; ou

(B) un composé de formule $R^*$-$NH_2$ si Q est X dans la formule I, où $R^*$ est sélectionné parmi le groupe comprenant $R^5$ ou un groupe de formule

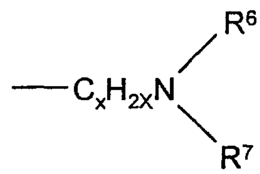

dans laquelle x est soit :

(a) un entier de 8 à 30, et $R^6$ et $R^7$ peuvent être identiques ou différents et sont sélectionnés parmi : un alkyle en $C_{1-30}$ ; un alcényle en $C_{2-30}$ ; un groupe aromatique en $C_{5-30}$ ; un groupe aromatique substitué par un alkyle en $C_{7-30}$ ; ou un groupe aryle-alcényle en $C_{8-30}$, à la condition qu'il n'y ait aucune double liaison en position alpha à l'atome d'azote, à moins que le carbone alpha fasse partie d'un cycle aromatique moyennant quoi cela est permis, et à la condition qu'il n'y ait pas de ramification au niveau du carbone lié directement à N ; soit $R^6$ ou $R^7$, mais pas les deux, peuvent également être l'hydrogène, ou

(b) un entier de 1 à 7, et soit $R^6$ ou $R^7$ sont H et l'autre est sélectionné parmi : un alkyle en $C_{1-30}$ ; un alcényle en $C_{2-30}$ ; un groupe aromatique en $C_{6-30}$ ; un groupe aromatique substitué par un alkyle en $C_{7-30}$ ; ou un groupe aryle-alcényle en $C_{8-30}$, à la condition qu'il n'y ait aucune double liaison en position alpha à l'atome d'azote, à moins que le carbone alpha fasse partie d'un cycle aromatique moyennant quoi cela est permis, et à la condition qu'il n'y ait pas de ramification au niveau du carbone lié directement à N ; ou si ni $R^6$ ni $R^7$ ne sont l'hydrogène, alors $R^6$ et $R^7$ peuvent être identiques ou différents et au moins un parmi $R^6$ ou $R^9$ doit être un alkyle en $C_{8-30}$ ; un alcényle en $C_{8-30}$ ; un groupe aromatique en $C_{8-30}$ ou un groupe aromatique substitué par un alkyle en $C_{7-30}$ ; ou un groupe aryle-alcényle en $C_{8-30}$, à la condition qu'il n'y ait aucune double liaison en position alpha à l'atome d'azote, à moins que le carbone alpha fasse partie d'un cycle aromatique moyennant quoi cela est permis, et à la condition qu'il n'y ait pas de ramification au niveau du carbone lié directement à N ; et l'autre peut être un alkyle en $C_{1-30}$ ; un alcényle en $C_{2-30}$ ; un groupe aromatique en $C_{6-30}$ ; un groupe aromatique substitué par un alkyle en $C_{7-30}$ ; ou un groupe aryle-alcényle en $C_{8-30}$, là encore à la condition qu'il n'y ait aucune double liaison en position alpha à l'atome d'azote, à moins que le carbone alpha fasse partie d'un cycle aromatique moyennant quoi cela est permis, et à la condition encore qu'il n'y ait pas de ramification au niveau du carbone lié directement à N.

**2.** Procédé défini dans la revendication 1, dans lequel chaque $R^1$, $R^2$ et $R^3$ est hydroxyle ou un groupe hydrolysable.

**3.** Procédé défini dans l'une quelconque des revendications 1-2, dans lequel le groupe hydrolysable présente la formule $OC_pH2_{p+1}$, où p a une valeur de 1 à 10.

**4.** Procédé défini dans l'une quelconque des revendications 1-3, dans lequel le groupe divalent $R^4$ présente la formule :

$$-(CH_2)_p(O)_o(C_6H_4)_n(CH_2)_m(CH=CH)_k-$$

dans laquelle k, m, n, o et p sont tous des nombres entiers et l'ordre des groupes fonctionnels n'est pas limité si ce n'est que ni N ni O ne sont directement liés à Si dans le composé de formule I.

**5.** Procédé défini dans l'une quelconque des revendications 1-4, dans lequel $R^5$ est un groupe alkyle ou alcényl en $C_{8-20}$ monoinsaturé.

**6.** Procédé défini dans l'une quelconque des revendications 1-4, dans lequel $R^5$ est un groupe alkyle ou alcényl en $C_{16-18}$ monoinsaturé.

**7.** Procédé défini dans l'une quelconque des revendications 1-6, dans lequel $R^6$ est l'hydrogène.

**8.** Procédé défini dans l'une quelconque des revendications 1-7, dans lequel $R^6$ est l'hydrogène et $R^6$ est un groupe alcényle sélectionné parmi le groupe constitué d'alkyle de soja, d'alkyle d'huile de suif, de stéaryle, d'alkyle de suif dihydrogéné, de cocoalkyle, l'alkyle de rosine, de palmityle et de dérivés de ceux-ci qui comprennent une ou plusieurs insaturations.

**9.** Procédé défini dans l'une quelconque des revendications 1-8, dans lequel X est sélectionné parmi le groupe constitué d'acétate, de chlore, de brome, d'iode et de sulfate.

**10.** Procédé défini dans l'une quelconque des revendications 1-9, dans lequel les particules comprennent des composés inorganiques insolubles dans l'eau.

**11.** Procédé défini dans l'une quelconque des revendications 1-9, dans lequel les particules sont sélectionnées parmi le groupe constitué de l'oxyde de titane, l'oxyde ferrique, l'oxyde ferrique hydraté, l'oxyde ferreux, l'oxyde d'antimoine, le carbonate de baryum, l'oxyde de zinc, le borate de zinc, l'oxyde de plomb, le phosphite de plomb dibasique, le silicate de plomb, le sulfate de plomb tribasique et des mélanges de ceux-ci.

**12.** Procédé défini dans l'une quelconque des revendications 1-9, dans lequel les particules comprennent de la silice.

**13.** Procédé défini dans l'une quelconque des revendications 1-12, comprenant encore l'étape consistant en :

l'admixtion des particules traitées avec une solution de polymère et en la formation du mélange en une dispersion de polymère.

**14.** Procédé défini dans l'une quelconque des revendications 1-12, comprenant encore l'étape consistant en :

l'admixtion d'une boue de particules traitées avec une solution de polymère et en la formation du mélange en une dispersion de polymère.

**15.** Procédé défini dans l'une quelconque des revendications 13-14,dans lequel la solution de polymère comprend un polymère et un solvant.

**16.** Procédé défini dans la revendication 15, dans lequel le polymère est sélectionné parmi le groupe constitué d'un élastomère, d'un polymère greffé ou d'un polymère séquencé de monomères ayant au moins une liaison insaturée d'éthylène et polymérisable par cette insaturation, un plastique et des mélanges de ceux-ci.

**17.** Procédé défini dans la revendication 16, dans lequel l'élastomère est sélectionné parmi le groupe constitué le caoutchouc naturel (NR), le caoutchouc cis-1,4-polyisoprène (IR), le caoutchouc de polybutadiène (BR), le caoutchouc de styrène-butadiène (SBR), le caoutchouc d'acrylonitrile-butadiène (NBR), le caoutchouc d'acrylonitrile-butadiène hydrogéné (HNBR), le caoutchouc de butyle (IIR), le caoutchouc de butyle halogéné (HIIR), le caoutchouc de monomère éthylène-propylène (EPM), le caoutchouc de monomère éthylène-propylène-diène (EPDM), le caoutchouc de chloroprène (CR), le caoutchouc d'acétate d'éthylène-vinyle (EVM), le caoutchouc de silicone (Q), le caoutchouc d'épichlorhydrine (ECO), le caoutchouc d'uréthane (AU EU) et des mélanges de ceux-ci.

**18.** Procédé défini dans la revendication 16, dans lequel le plastique est sélectionné parmi le groupe constitué du polystyrène, du polyéthylène, du polypropylène, du polyéthylène chloré, des polymères d'acrylonitrile-butadiène-styrène (ABS), du plastique d'éthylène-vinyle-acétate (EVA), du polychlorure de vinyle (PVC), du polychlorure de vinyle plastifié (PVC), du polyméthylméthacrylate (PMMA), du plastique d'épichlorhydrine (ECO) et des mélanges de ceux-ci.

**19.** Procédé défini dans la revendication 15, dans lequel le solvant est globalement non miscible dans l'eau.

**20.** Procédé défini dans la revendication 15, dans lequel le solvant est sélectionné parmi le groupe constitué du cyclohexane, du chlorobenzène, de l'hexane, du benzène, du toluène, du pentane et des mélanges de ceux-ci.

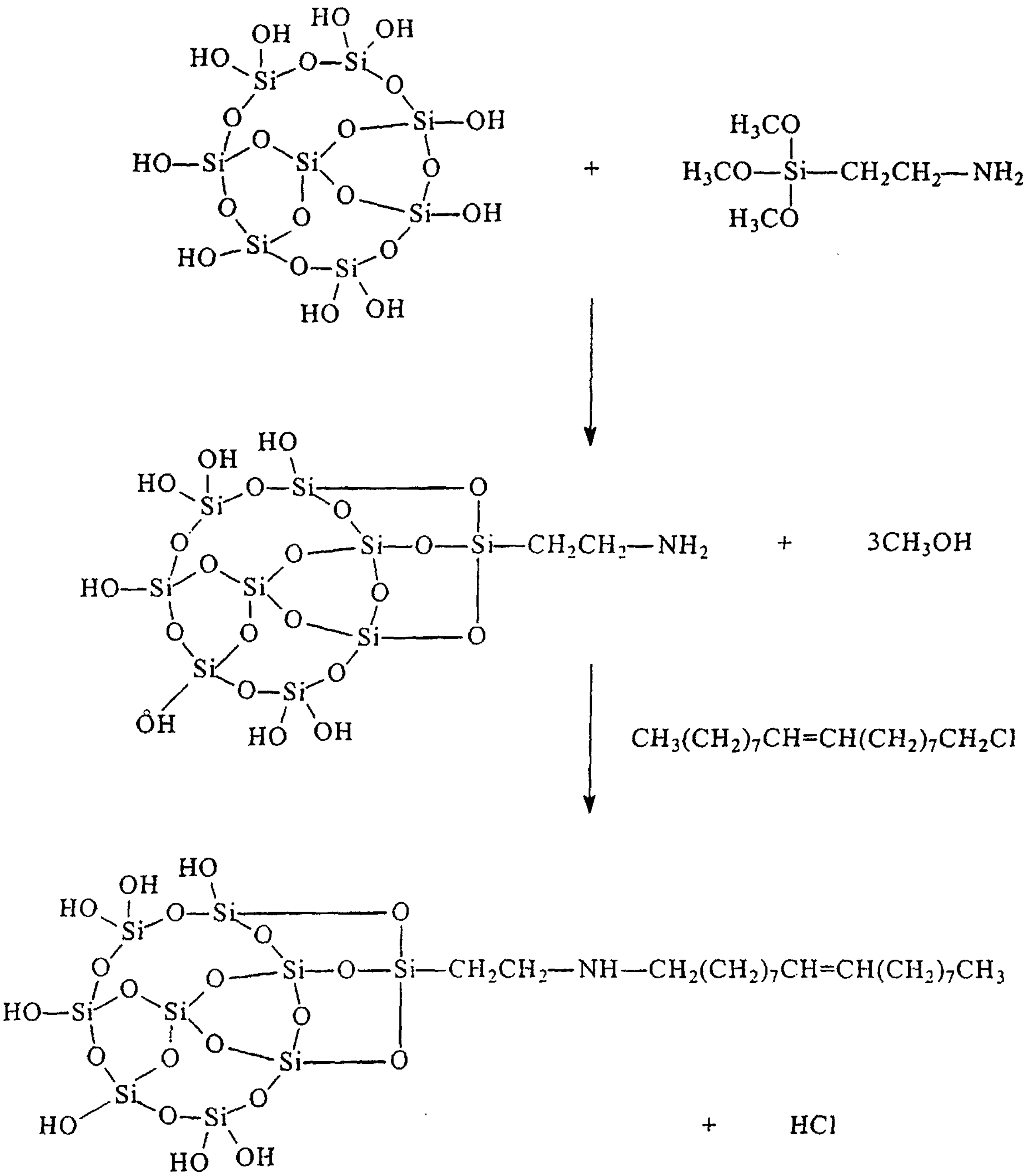


**FIG. 1**

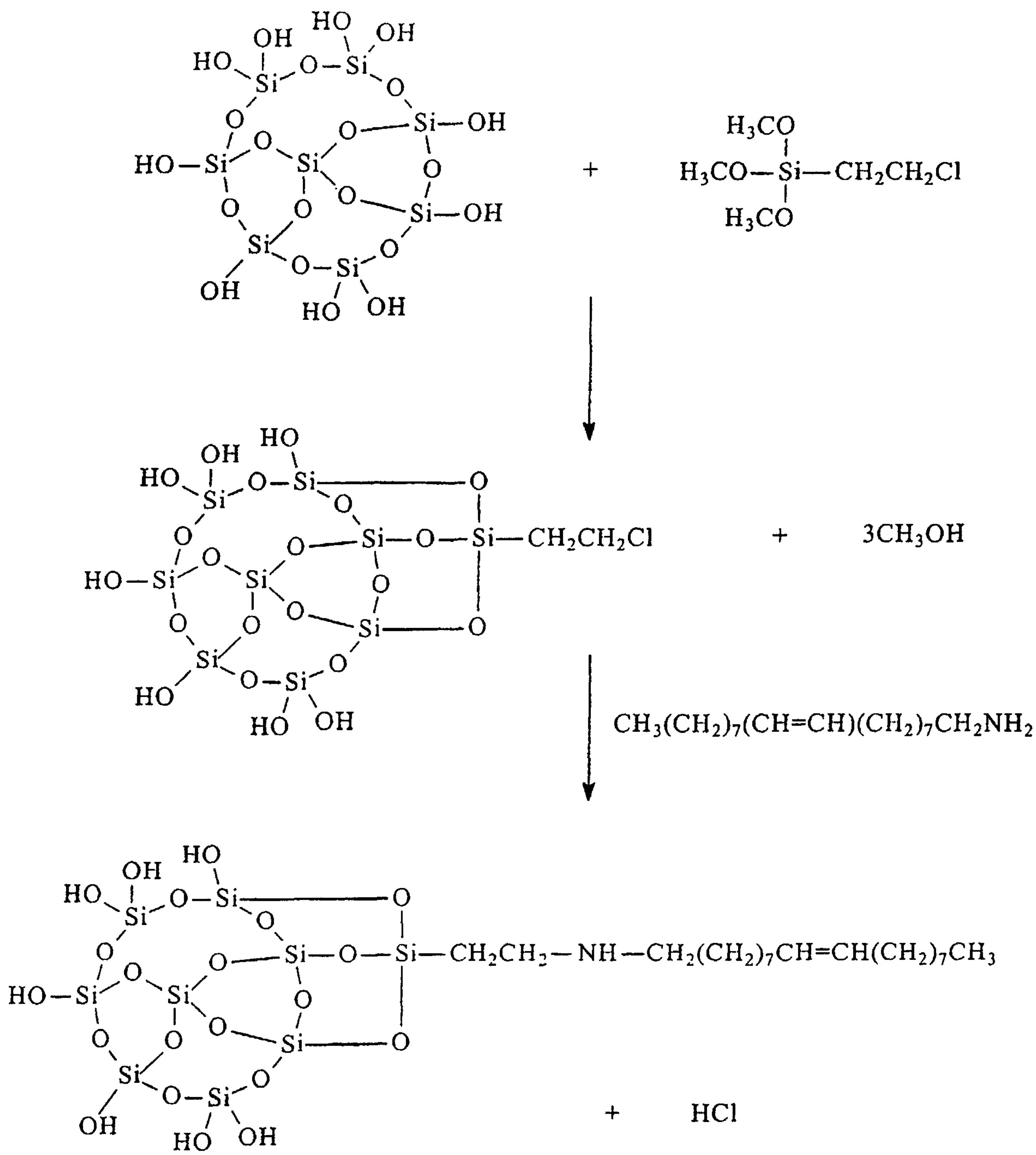


FIG. 2

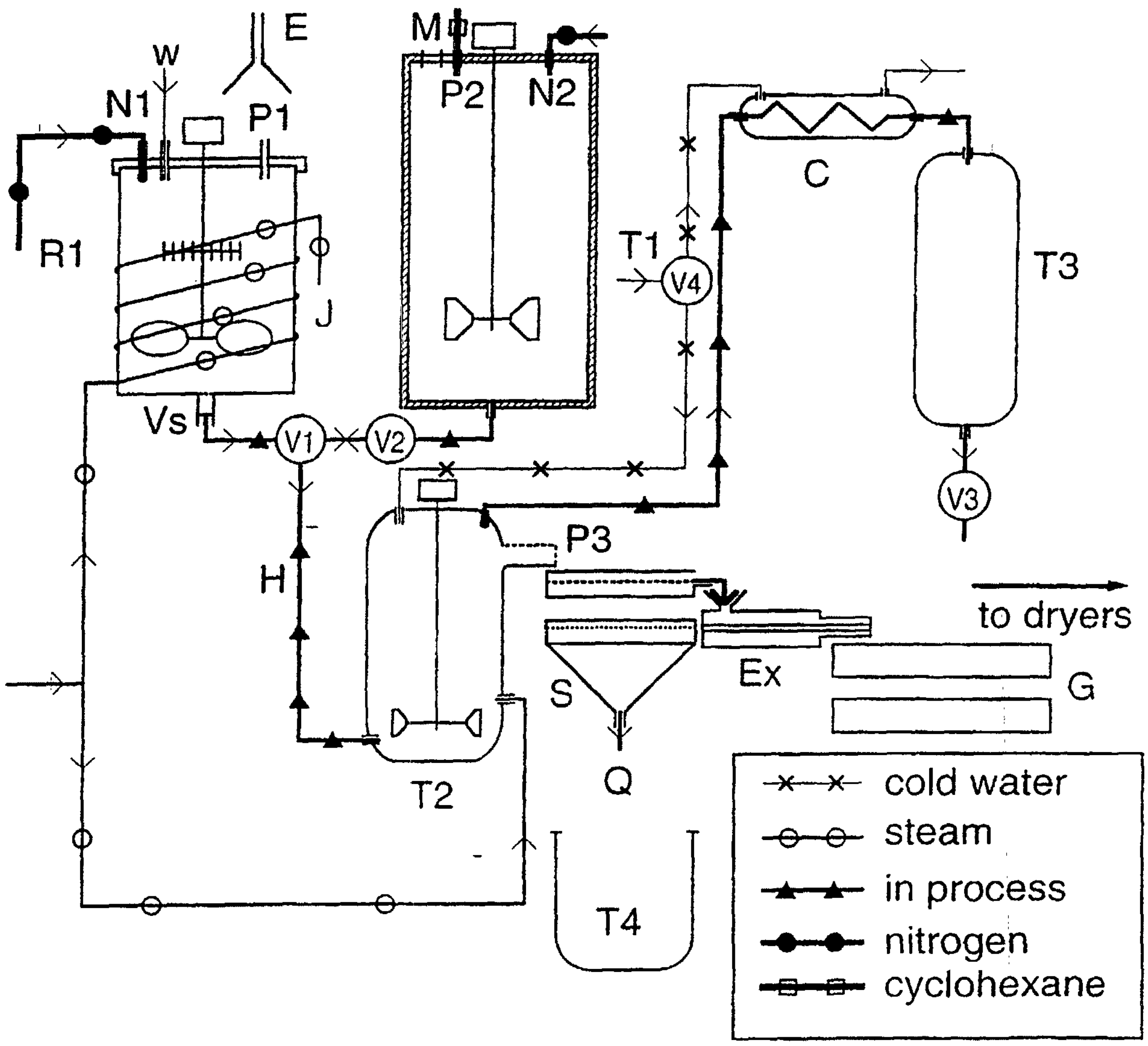
E
M
W
N1
P1
P2
N2
R1
J
C
T1
V4
T3
Vs
V1
V2
V3
P3
H
to dryers
Ex
S
G
T2
Q
T4
cold water
steam
in process
nitrogen
cyclohexane

FIG.3